# EUROPEAN PATENT APPLICATION

(11) **EP 4 845 137 A1**
(43) Date of publication of application: **25.11.2026**
(21) Application number: 26171902.5
(22) Date of filing: 13.04.2026
(51) Int. Cl.: H04M 3/428, H04M 1/72469

(54) **COMMUNICATIONS USER INTERFACES**

(30) Priority: 19.05.2025 US 202563808517 P; 05.01.2026 US 202619439764
(71) Applicant: Apple Inc., Cupertino, CA 95014 (US)
(72) Inventor: CHANG, Jae Woo, Cupertino, 95014 (US); CHAO, Edward, Cupertino, 95014 (US)
(74) Representative: Zacco Denmark A/S

(57) **Abstract**

Dynamically display hold option during an active call only when certain audio content criteria are met such as the remote party is playing music, no speech is detected, the device is muted, or an automated message is present. When user selects the hold option, the call is placed on hold, audio output is stopped, and a secondary user interface UI lock-screen, home screen or another app is shown together with a visual indication of the hold state. While on hold the device presents transcript of any spoken audio received from the other participants and offers an answer-call action when live speech is detected.

## Description

### FIELD

The present disclosure relates generally to computer user interfaces, and more specifically to techniques and user interfaces for exchanging communications between two or more devices.

### BACKGROUND

Electronic devices include displays that can be used to display various types of content and to provide information to a user. Some electronic devices also include hardware and/or software to connect with other electronic devices to allow for communication between users.

### BRIEF SUMMARY

Some techniques for providing communications user interfaces using electronic devices, however, are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for providing communications user interfaces. Such methods and interfaces optionally complement or replace other methods for providing communications user interfaces. Such methods and interfaces reduce the cognitive burden on a user and produce a more efficient human-machine interface. For battery-operated computing devices, such methods and interfaces conserve power and increase the time between battery charges.

In accordance with some embodiments, a method is described. The method is performed at a computer system that is in communication with one or more display generation components and one or more input devices, and comprises: displaying, via the one or more display generation components, a call user interface, wherein the call user interface is indicative of the computer system participating in an active communication session; while displaying the call user interface, detecting first audio content corresponding to the active communication session; and in response to detecting the first audio content corresponding to the active communication session: in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and in accordance with a determination that the active communication session does not satisfy the first set of one or more hold criteria, forgoing display of the hold option.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices, the one or more programs including instructions for: displaying, via the one or more display generation components, a call user interface, wherein the call user interface is indicative of the computer system participating in an active communication session; while displaying the call user interface, detecting first audio content corresponding to the active communication session; and in response to detecting the first audio content corresponding to the active communication session: in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and in accordance with a determination that the active communication session does not satisfy the first set of one or more hold criteria, forgoing display of the hold option.

In accordance with some embodiments, a transitory computer-readable storage medium is described. The transitory computer-readable storage medium stores one or more programs configured to be executed by one or more processors of a computer system that is in communication with one or more display generation components and one or more input devices, the one or more programs including instructions for: displaying, via the one or more display generation components, a call user interface, wherein the call user interface is indicative of the computer system participating in an active communication session; while displaying the call user interface, detecting first audio content corresponding to the active communication session; and in response to detecting the first audio content corresponding to the active communication session: in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and in accordance with a determination that the active communication session does not satisfy the first set of one or more hold criteria, forgoing display of the hold option.

In accordance with some embodiments, a computer system is described. The computer system is configured to communicate with one or more display generation components and one or more input devices, and comprises: one or more processors; and memory storing one or more programs configured to be executed by the one or more processors, the one or more programs including instructions for: displaying, via the one or more display generation components, a call user interface, wherein the call user interface is indicative of the computer system participating in an active communication session; while displaying the call user interface, detecting first audio content corresponding to the active communication session; and in response to detecting the first audio content corresponding to the active communication session: in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and in accordance with a determination that the active communication session does not satisfy the first set of one or more hold criteria, forgoing display of the hold option.

In accordance with some embodiments, a computer system is described. The computer system is configured to communicate with one or more display generation components and one or more input devices, and comprises: means for displaying, via the one or more display generation components, a call user interface, wherein the call user interface is indicative of the computer system participating in an active communication session; means for, while displaying the call user interface, detecting first audio content corresponding to the active communication session; and means for, in response to detecting the first audio content corresponding to the active communication session: in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and in accordance with a determination that the active communication session does not satisfy the first set of one or more hold criteria, forgoing display of the hold option.

In accordance with some embodiments, a computer program product is described. The computer program product comprises one or more programs configured to be executed by one or more processors of a computer system that is in communication with one or more display generation components and one or more input devices, the one or more programs including instructions for: displaying, via the one or more display generation components, a call user interface, wherein the call user interface is indicative of the computer system participating in an active communication session; while displaying the call user interface, detecting first audio content corresponding to the active communication session; and in response to detecting the first audio content corresponding to the active communication session: in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and in accordance with a determination that the active communication session does not satisfy the first set of one or more hold criteria, forgoing display of the hold option.

In accordance with some embodiments, a method is described. The method is performed at a computer system that is in communication with one or more display generation components and one or more input devices, and comprises: displaying, via the one or more display generation components, a call user interface, wherein the call user interface is indicative of the computer system participating in an active communication session; while displaying the call user interface, detecting, via the one or more input devices, a first set of one or more user inputs, wherein the first set of one or more user inputs includes one or more user inputs corresponding to a user request to put the active communication session on hold; and in response to detecting the first set of one or more user inputs, concurrently displaying, via the one or more display generation components: a first visual indication indicative of the active communication session being on hold; and a first user interface that is different from the call user interface and does not pertain to the active communication session.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices, the one or more programs including instructions for: displaying, via the one or more display generation components, a call user interface, wherein the call user interface is indicative of the computer system participating in an active communication session; while displaying the call user interface, detecting, via the one or more input devices, a first set of one or more user inputs, wherein the first set of one or more user inputs includes one or more user inputs corresponding to a user request to put the active communication session on hold; and in response to detecting the first set of one or more user inputs, concurrently displaying, via the one or more display generation components: a first visual indication indicative of the active communication session being on hold; and a first user interface that is different from the call user interface and does not pertain to the active communication session.

In accordance with some embodiments, a transitory computer-readable storage medium is described. The transitory computer-readable storage medium stores one or more programs configured to be executed by one or more processors of a computer system that is in communication with one or more display generation components and one or more input devices, the one or more programs including instructions for: displaying, via the one or more display generation components, a call user interface, wherein the call user interface is indicative of the computer system participating in an active communication session; while displaying the call user interface, detecting, via the one or more input devices, a first set of one or more user inputs, wherein the first set of one or more user inputs includes one or more user inputs corresponding to a user request to put the active communication session on hold; and in response to detecting the first set of one or more user inputs, concurrently displaying, via the one or more display generation components: a first visual indication indicative of the active communication session being on hold; and a first user interface that is different from the call user interface and does not pertain to the active communication session.

In accordance with some embodiments, a computer system is described. The computer system is configured to communicate with one or more display generation components and one or more input devices, and comprises: one or more processors; and memory storing one or more programs configured to be executed by the one or more processors, the one or more programs including instructions for: displaying, via the one or more display generation components, a call user interface, wherein the call user interface is indicative of the computer system participating in an active communication session; while displaying the call user interface, detecting, via the one or more input devices, a first set of one or more user inputs, wherein the first set of one or more user inputs includes one or more user inputs corresponding to a user request to put the active communication session on hold; and in response to detecting the first set of one or more user inputs, concurrently displaying, via the one or more display generation components: a first visual indication indicative of the active communication session being on hold; and a first user interface that is different from the call user interface and does not pertain to the active communication session.

In accordance with some embodiments, a computer system is described. The computer system is configured to communicate with one or more display generation components and one or more input devices, and comprises: means for displaying, via the one or more display generation components, a call user interface, wherein the call user interface is indicative of the computer system participating in an active communication session; means for, while displaying the call user interface, detecting, via the one or more input devices, a first set of one or more user inputs, wherein the first set of one or more user inputs includes one or more user inputs corresponding to a user request to put the active communication session on hold; and means for, in response to detecting the first set of one or more user inputs, concurrently displaying, via the one or more display generation components: a first visual indication indicative of the active communication session being on hold; and a first user interface that is different from the call user interface and does not pertain to the active communication session.

In accordance with some embodiments, a computer program product is described. The computer program product comprises one or more programs configured to be executed by one or more processors of a computer system that is in communication with one or more display generation components and one or more input devices, the one or more programs including instructions for: displaying, via the one or more display generation components, a call user interface, wherein the call user interface is indicative of the computer system participating in an active communication session; while displaying the call user interface, detecting, via the one or more input devices, a first set of one or more user inputs, wherein the first set of one or more user inputs includes one or more user inputs corresponding to a user request to put the active communication session on hold; and in response to detecting the first set of one or more user inputs, concurrently displaying, via the one or more display generation components: a first visual indication indicative of the active communication session being on hold; and a first user interface that is different from the call user interface and does not pertain to the active communication session.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for providing communications user interfaces, thereby increasing the effectiveness, efficiency, and user satisfaction with such devices. Such methods and interfaces may complement or replace other methods for providing communications user interfaces.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3A is a block diagram of an exemplary multifunction device with a display and a touch-sensitive surface in accordance with some embodiments.
FIGS. 3B-3G illustrate the use of Application Programming Interfaces (APIs) to perform operations.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIGS. 6A-6W illustrate exemplary devices and exemplary communications user interfaces, in accordance with some embodiments.
FIG. 7 is a flow diagram illustrating methods of providing communications user interfaces, in accordance with some embodiments.
FIG. 8 is a flow diagram illustrating methods of providing communications user interfaces, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for exchanging communications with other devices. Such techniques can reduce the cognitive burden on a user who uses electronic devices to communicate with other users, thereby enhancing productivity. Further, such techniques can reduce processor and battery power otherwise wasted on redundant user inputs.

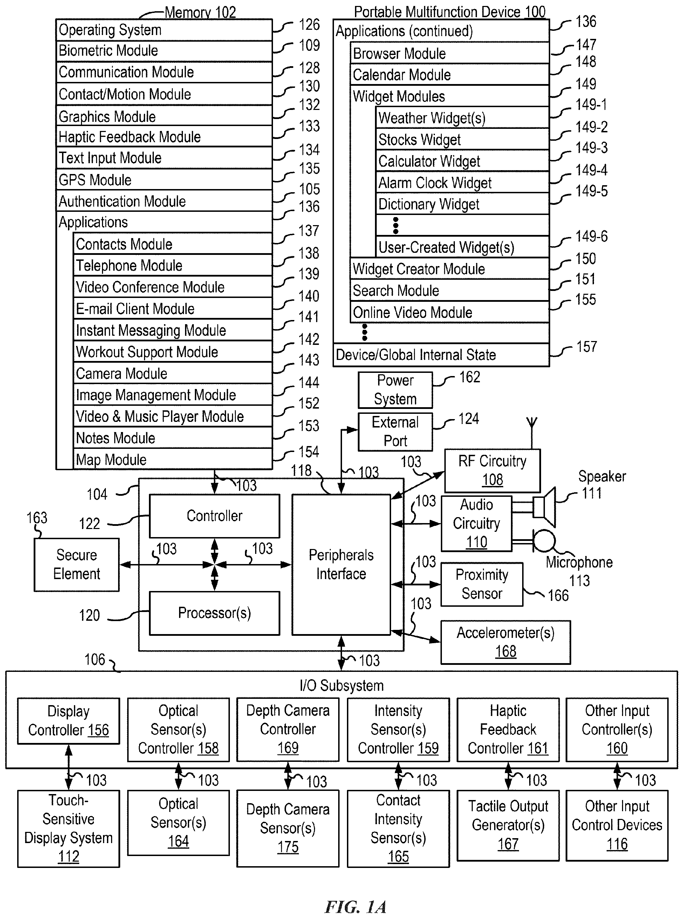

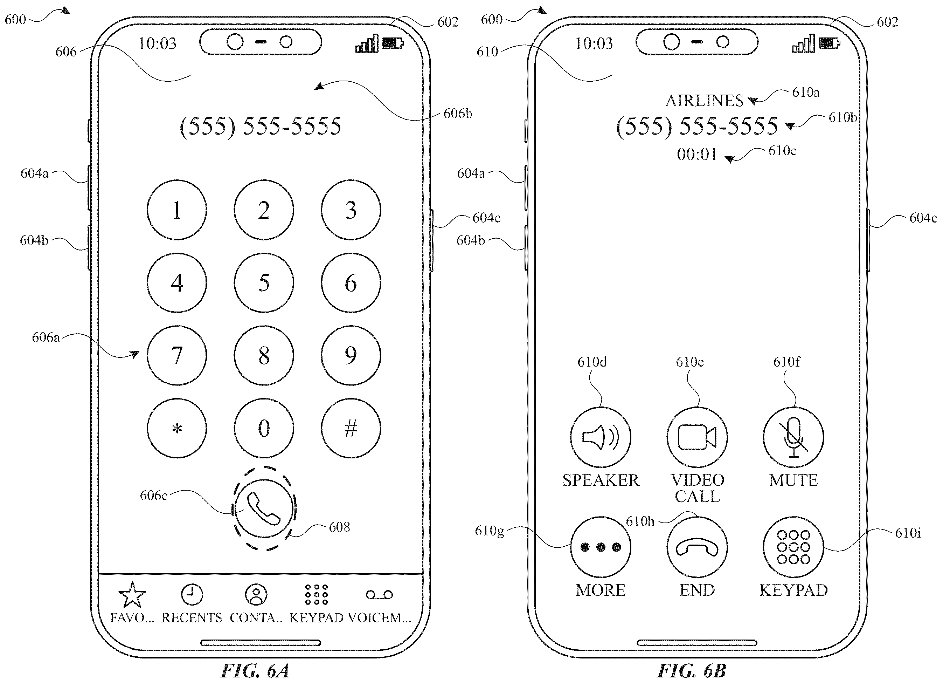

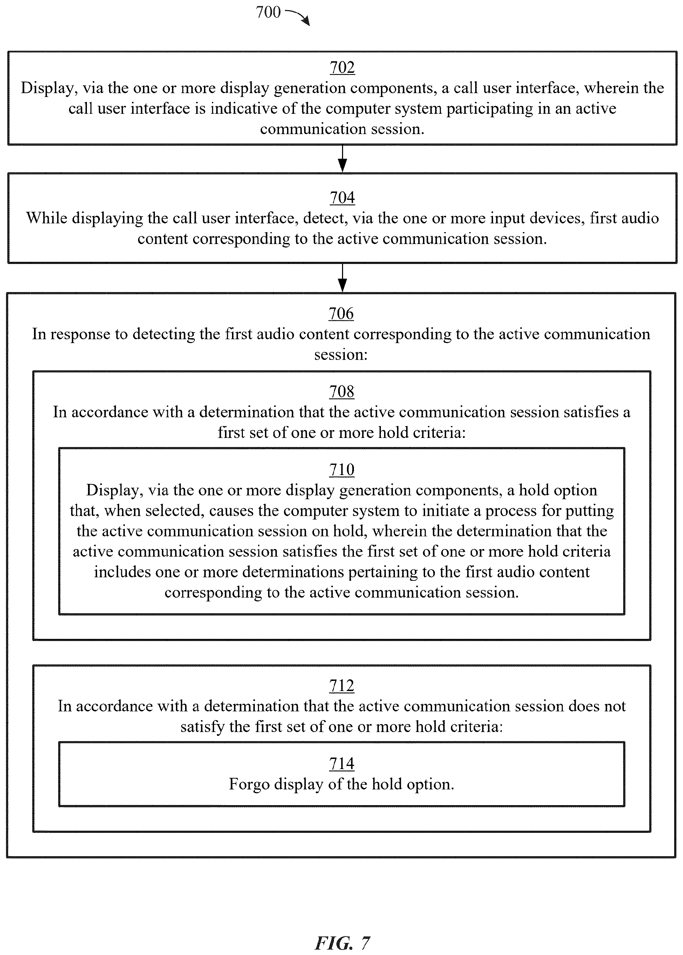

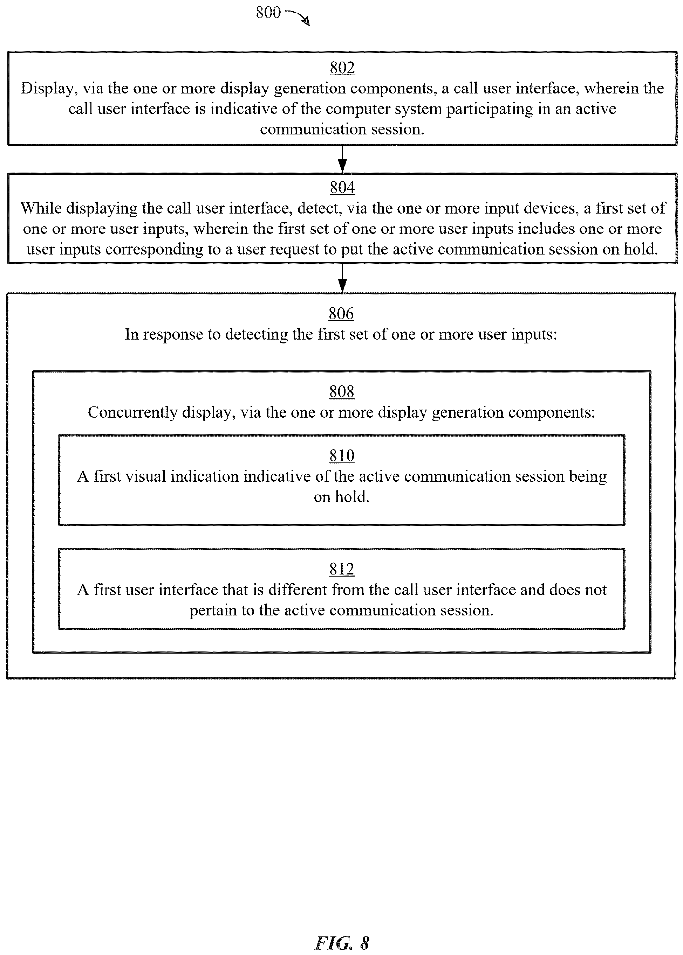

Below, FIGS. 1A-1B, 2, 3A-3G, 4A-4B, and 5A-5B provide a description of exemplary devices for performing the techniques for providing communications user interfaces. FIGS. 6A-6W illustrate exemplary communications user interfaces. FIG. 7 is a flow diagram illustrating methods of providing communications user interfaces in accordance with some embodiments. FIG. 8 is a flow diagram illustrating methods of providing communications user interfaces in accordance with some embodiments. The user interfaces in FIGS. 6A-6W are used to illustrate the processes described below, including the processes in FIG. 7 and FIG. 8.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, and/or additional techniques. These techniques also reduce power usage and improve battery life of the device by enabling the user to use the device more quickly and efficiently.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Although the following description uses terms "first," "second," etc. to describe various elements, these elements should not be limited by the terms. In some embodiments, these terms are used to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

As used herein, the phrase "one or more of A and/or B" is construed to include all combinations of A and B, including, but not limited to: A individually without B; B individually without A; as well as a combination of A and B. The phrase "one or more of A, B, and/or C" is construed to include all combinations of A, B, and C, including, but not limited to: A individually without B and C; B individually without A and C; C individually without A and B; as well as any combinations of A, B, and/or C (e.g., A and B without C; A and C without B; B and C without A; and/or A, B, and C). Additionally, as used herein, the phrase "selected from the group consisting of A, B, C, and a combination thereof" and the phrase "at least one of A, B, and C" shall be construed to have the same meaning as the phrase "one or more of A, B, and/or C" as defined above. As used herein, the phrase "at least one of A, B, or C" and "one or more of A, B, or C" shall be construed to have the same meaning as the phrase "one or more of A, B, and/or C" as defined above. As used herein, the phrase "a combination including all of A, B, and C" is construed to include a combination of all the elements listed (e.g., a combination of A, B, and C).

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component (e.g., a display device such as a head-mounted display (HMD), a display, a projector, a touch-sensitive display, or other device or component that presents visual content to a user, for example on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage media), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

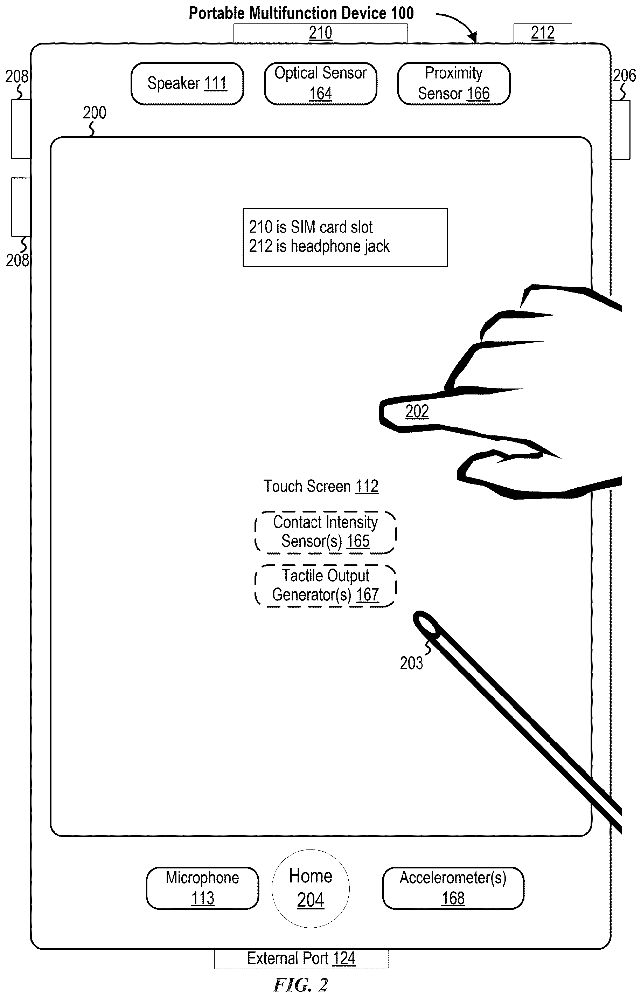

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes secure element 163 for securely storing information. In some embodiments, secure element 163 is a hardware component (e.g., a secure microcontroller chip) configured to securely store data or an algorithm. In some embodiments, secure element 163 provides (e.g., releases) secure information (e.g., payment information (e.g., an account number and/or a transaction-specific dynamic security code), identification information (e.g., credentials of a state-approved digital identification), and/or authentication information (e.g., data generated using a cryptography engine and/or by performing asymmetric cryptography operations)). In some embodiments, secure element 163 provides (or releases) the secure information in response to device 100 receiving authorization, such as a user authentication (e.g., fingerprint authentication; passcode authentication; detecting double-press of a hardware button when device 100 is in an unlocked state, and optionally, while device 100 has been continuously on a user's wrist since device 100 was unlocked by providing authentication credentials to device 100, where the continuous presence of device 100 on the user's wrist is determined by periodically checking that the device is in contact with the user's skin). For example, device 100 detects a fingerprint at a fingerprint sensor (e.g., a fingerprint sensor integrated into a button) of device 100. Device 100 determines whether the detected fingerprint is consistent with an enrolled fingerprint. In accordance with a determination that the fingerprint is consistent with the enrolled fingerprint, secure element 163 provides (e.g., releases) the secure information. In accordance with a determination that the fingerprint is not consistent with the enrolled fingerprint, secure element 163 forgoes providing (e.g., releasing) the secure information.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Accelerationbased Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

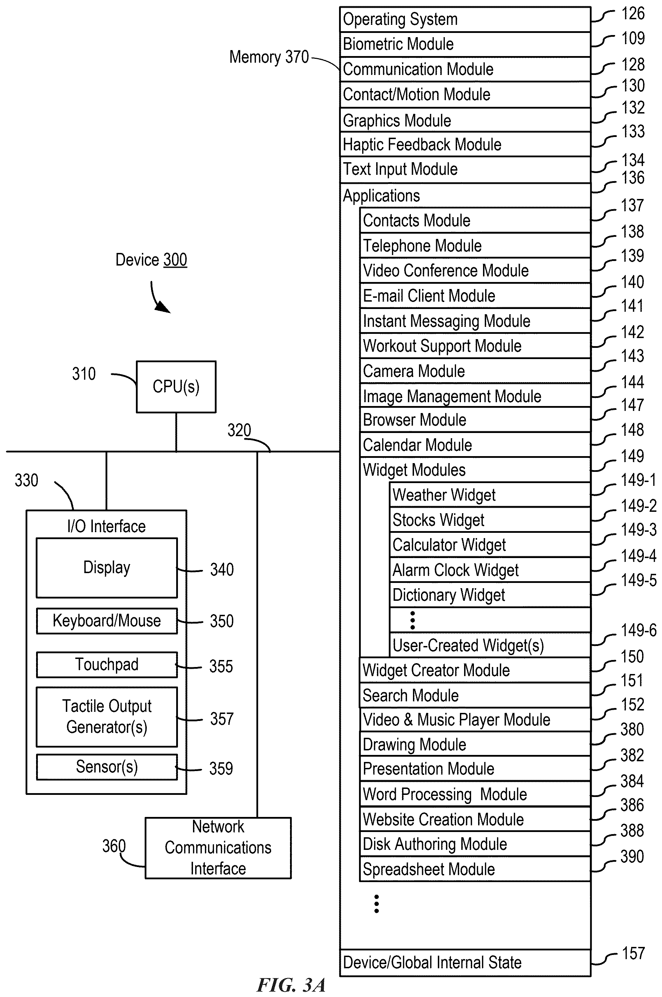

In some embodiments, the software components stored in memory 102 include operating system 126, biometric module 109, communication module (or set of instructions) 128, contact/motion module (or set of instructions) 130, graphics module (or set of instructions) 132, text input module (or set of instructions) 134, Global Positioning System (GPS) module (or set of instructions) 135, authentication module 105, and applications (or sets of instructions) 136. Furthermore, in some embodiments, memory 102 (FIG. 1A) or 370 (FIG. 3A) stores device/global internal state 157, as shown in FIGS. 1A and 3A. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE^{®}, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Biometric module 109 optionally stores information about one or more enrolled biometric features (e.g., fingerprint feature information, facial recognition feature information, eye and/or iris feature information) for use to verify whether received biometric information matches the enrolled biometric features. In some embodiments, the information stored about the one or more enrolled biometric features includes data that enables the comparison between the stored information and received biometric information without including enough information to reproduce the enrolled biometric features. In some embodiments, biometric module 109 stores the information about the enrolled biometric features in association with a user account of device 100. In some embodiments, biometric module 109 compares the received biometric information to an enrolled biometric feature to determine whether the received biometric information matches the enrolled biometric feature.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts module 137, e-mail client module 140, IM module 141, browser module 147, and any other application that needs text input).

GPS module 135 determines the location of the device and provides this information for use in various applications (e.g., to telephone module 138 for use in location-based dialing; to camera module 143 as picture/video metadata; and to applications that provide location-based services such as weather widgets, local yellow page widgets, and map/navigation widgets).

Authentication module 105 determines whether a requested operation (e.g., requested by an application of applications 136) is authorized to be performed. In some embodiments, authentication module 105 receives for an operation to be perform that optionally requires authentication. Authentication module 105 determines whether the operation is authorized to be performed, such as based on a series of factors, including the lock status of device 100, the location of device 100, whether a security delay has elapsed, whether received biometric information matches enrolled biometric features, and/or other factors. Once authentication module 105 determines that the operation is authorized to be performed, authentication module 105 triggers performance of the operation.

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone module 138, video conference module 139, e-mail client module 140, or IM module 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript^{®} file. In some embodiments, a widget includes an XML (Extensible Markup Language) file and a JavaScript^{®} file (e.g., Yahoo!^{®} Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

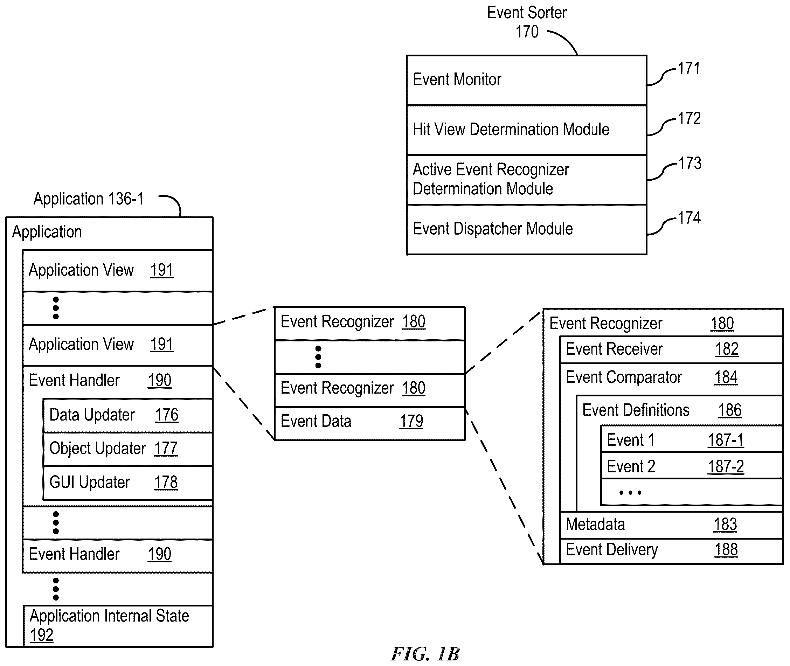

FIG. 1B is a block diagram illustrating exemplary components for event handling in accordance with some embodiments. In some embodiments, memory 102 (FIG. 1A) or 370 (FIG. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (e.g., 187-1 and/or 187-2) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definitions 186 include a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3A is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3A is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

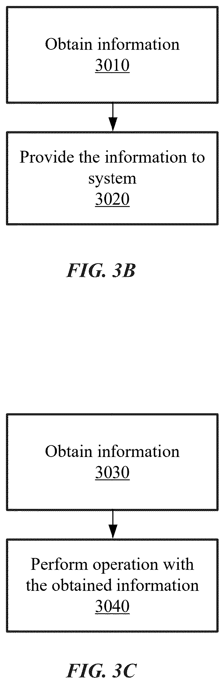

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

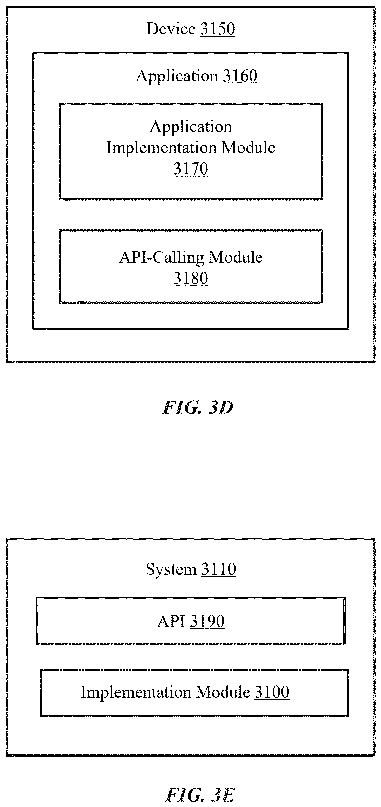

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

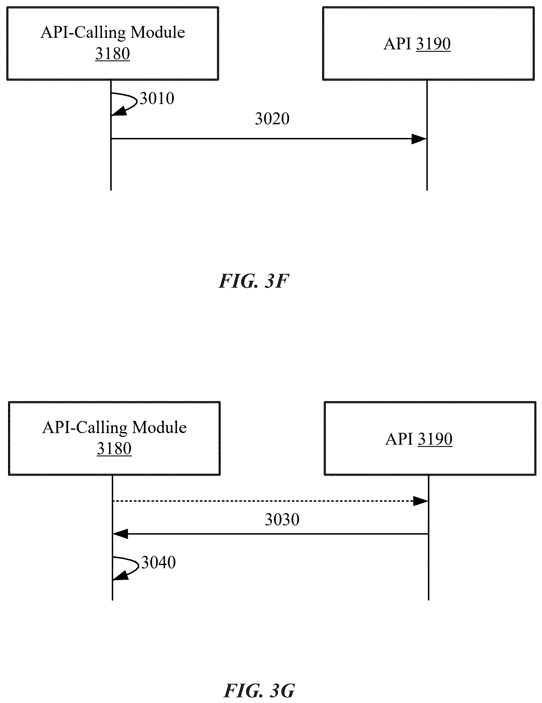

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform method 700 (FIG. 7) and/or method 800 (FIG. 8) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module 3180) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

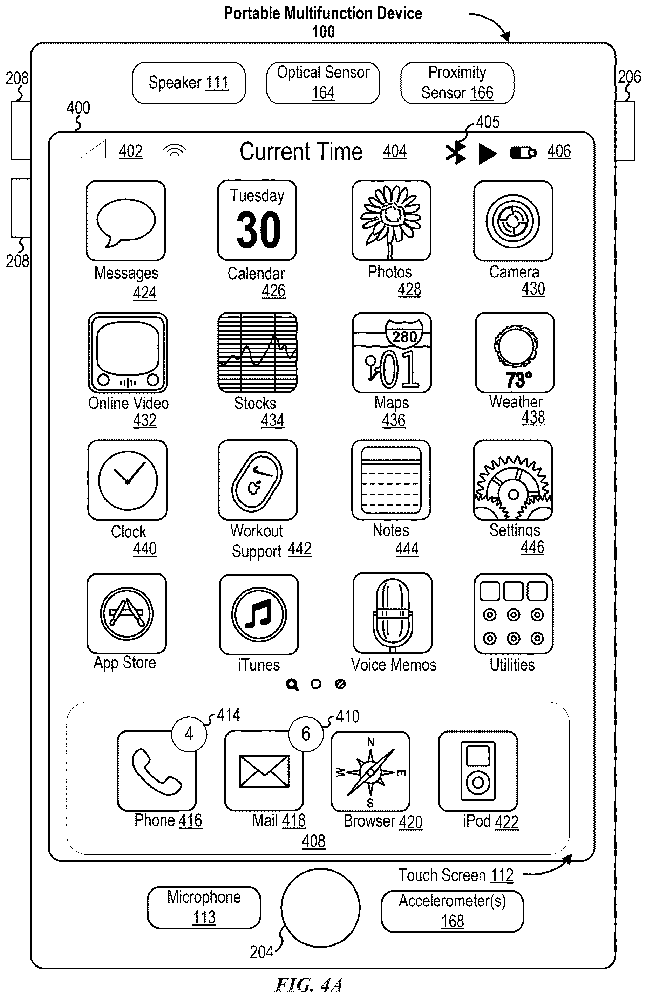

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ∘ Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   ∘ Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

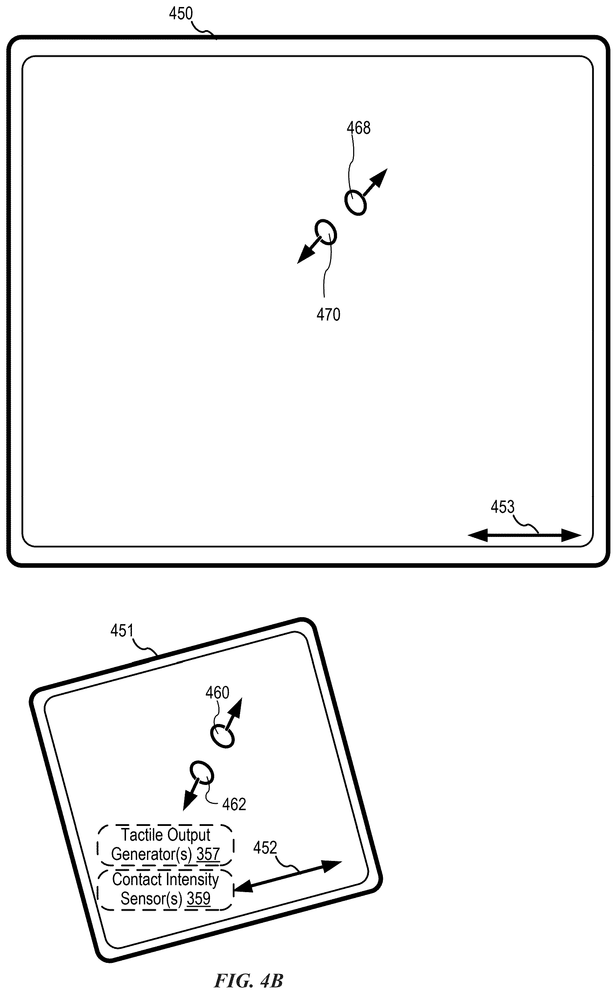

FIG. 4B illustrates an exemplary user interface on a device (e.g., device 300, FIG. 3A) with a touch-sensitive surface 451 (e.g., a tablet or touchpad 355, FIG. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., touch-sensitive surface 451 in FIG. 4B) has a primary axis (e.g., 452 in FIG. 4B) that corresponds to a primary axis (e.g., 453 in FIG. 4B) on the display (e.g., display 450). In accordance with these embodiments, the device detects contacts (e.g., contact 460 and contact 462 in FIG. 4B) with the touch-sensitive surface 451 at locations that correspond to respective locations on the display (e.g., in FIG. 4B, contact 460 corresponds to 468 and contact 462 corresponds to 470). In this way, user inputs (e.g., contacts 460 and 462, and movements thereof) detected by the device on the touch-sensitive surface (e.g., touch-sensitive surface 451 in FIG. 4B) are used by the device to manipulate the user interface on the display (e.g., display 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

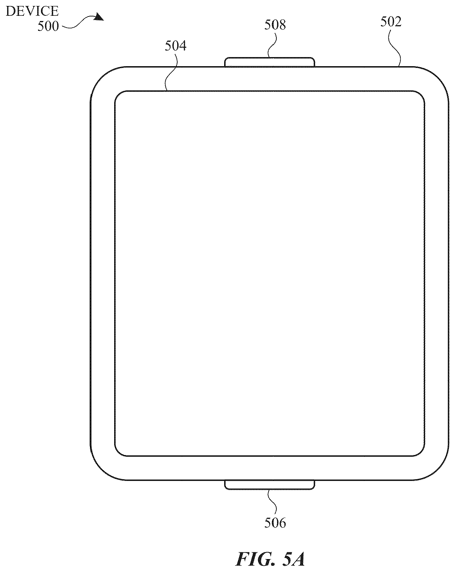

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

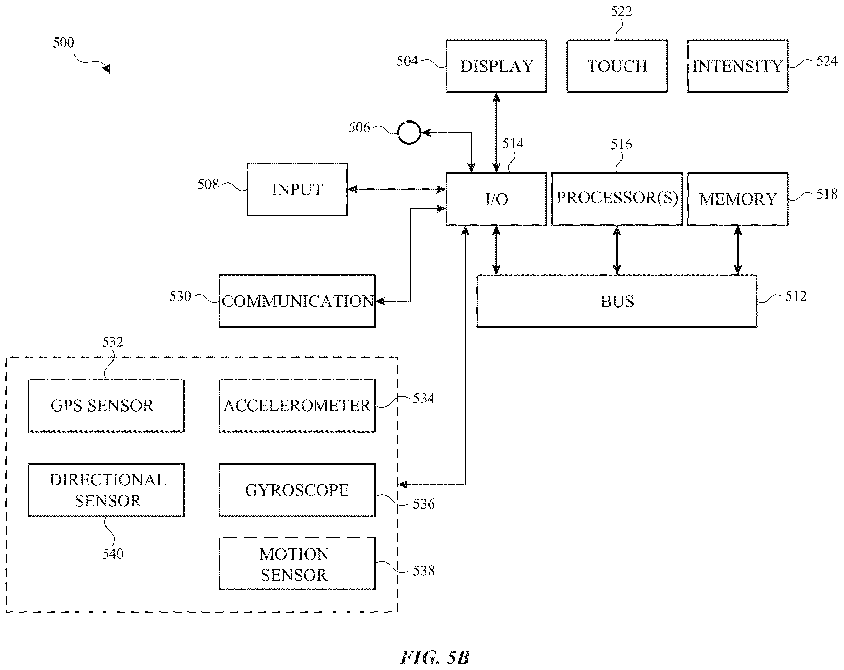

FIG. 5B depicts exemplary personal electronic device 500. In some embodiments, device 500 can include some or all of the components described with respect to FIGS. 1A, 1B, and 3A. Device 500 has bus 512 that operatively couples I/O section 514 with one or more computer processors 516 and memory 518. I/O section 514 can be connected to display screen 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage media, for storing computer-executable instructions, which, when executed by one or more computer processors 516, for example, can cause the computer processors to perform the techniques described below, including method 700 (FIG. 7) and method 800 (FIG. 8). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray^{®} technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3A, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3A or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

As used herein, an "installed application" refers to a software application that has been downloaded onto an electronic device (e.g., devices 100, 300, and/or 500) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

In some embodiments, the computer system is in a locked state or an unlocked state. In the locked state, the computer system is powered on and operational but is prevented from performing a predefined set of operations in response to user input. The predefined set of operations optionally includes navigation between user interfaces, activation or deactivation of a predefined set of functions, and activation or deactivation of certain applications. The locked state can be used to prevent unintentional or unauthorized use of some functionality of the computer system or activation or deactivation of some functions on the computer system. In some embodiments, in the unlocked state, the computer system is powered on and operational and is not prevented from performing at least a portion of the predefined set of operations that cannot be performed while in the locked state. When the computer system is in the locked state, the computer system is said to be locked. When the computer system is in the unlocked state, the computer is said to be unlocked. In some embodiments, the computer system in the locked state optionally responds to a limited set of user inputs, including input that corresponds to an attempt to transition the computer system to the unlocked state or input that corresponds to powering the computer system off.

Attention is now directed towards embodiments of user interfaces ("UI") and associated processes that are implemented on an electronic device, such as portable multifunction device 100, device 300, or device 500.

FIGS. 6A-6W illustrate exemplary communications user interfaces, in accordance with some embodiments. The user interfaces in these figures are used to illustrate the processes described below, including the processes in FIG. 7 and FIG. 8.

FIG. 6A illustrates computer system 600, which is a smart phone with touch-sensitive display 602 and buttons 604a-604c. At FIG. 6A, computer system 600 displays, via touch-sensitive display 602, outgoing call user interface 606. Outgoing call user interface 606 includes keypad 606a, number indication 606b, and dial option 606c. Keypad 606a includes buttons that are selectable by a user to enter a phone number to be dialed, while number indication 606b displays numbers that have been selected and/or entered by the user. In FIG. 6A, the user has interacted with keypad 606a to enter the phone number (555) 555-5555, as shown in number indication 606b. Option 606c, when selected, causes computer system 600 to initiate an outgoing phone call using the telephone number entered by the user and/or displayed in number indication 606b. At FIG. 6A, computer system 600 detects user input 608 (e.g., a tap input) corresponding to selection of option 606c.

At FIG. 6B, in response to detecting user input 608, computer system 600 displays, via touch-sensitive display 602, user interface 610. User interface 610 is indicative of an active communication session (e.g., an active phone call) between computer system 600 and another device and/or another user different from the user of computer system 600. User interface 610 includes indication 610a, indication 610b, indication 610c, option 610d, option 610e, option 610f, option 610g, option 610h, and option 610i. Indication 610b indicates and/or identification the phone number that was dialed by the user. Indication 610a identifies a name and/or entity associated with the phone number. Indication 610c indicates how long the communication session has been active. Option 610d, when selected, causes computer system 600 to enable or disable speaker audio output for the communication session. Option 610e, when selected, causes computer system 600 to initiate a video communication session with the dialed telephone number and/or contact. Option 610f, when selected, causes computer system 600 to enable or disable a mute function for the communication session. Option 610g, when selected, causes computer system 600 to display additional options as will be described in greater detail below. Option 610h, when selected, causes computer system 600 to end and/or terminate the communication session. Option 610i, when selected, causes computer system 600 to display a keypad (e.g., such as keypad 606a from FIG. 6A).

In various embodiments described herein, computer system 600 is configured to automatically display an option for the user to place the communication session on hold when certain criteria are met. In various embodiments, while the communication session is on hold, the communication session with one or more other participants in the communication session remains active because, for example, a third-party service provider (e.g., a hold service provider) maintains an active connection with the one or more other participants in the communication session, but computer system 600 does not maintain a direct and/or ongoing connection with the one or more other participants in the communication session until the communication session is "reconnected" and/or no longer on hold. In some embodiments, while the communication session is on hold, the communication session remains active (e.g., for example, by virtue of the third-party service provider maintaining the active connection with the other participants), but computer system 600 ceases outputting audio output corresponding to the communication session (e.g., ceases outputting audio output based on audio content received from the communication session and/or from other participants in the communication session) and/or ceases transmitting audio content into the communication session (e.g., for audio output by one or more other participants and/or one or more other devices participating in the communication session) until the communication session is "reconnected" and/or no longer on hold. In some embodiments, while the communication session is on hold, computer system 600 maintains the active communication session by continuing to be connected to the communication session and/or the one or more other participants in the communication session, but computer system 600 ceases outputting audio output corresponding to the communication session (e.g., ceases outputting audio output based on audio content received from the communication session and/or from other participants in the communication session) and/or ceases transmitting audio content into the communication session (e.g., for audio output by one or more other participants and/or one or more other devices participating in the communication session) until the communication session is "reconnected" and/or no longer on hold. Various example scenarios and embodiments are described in greater detail below.

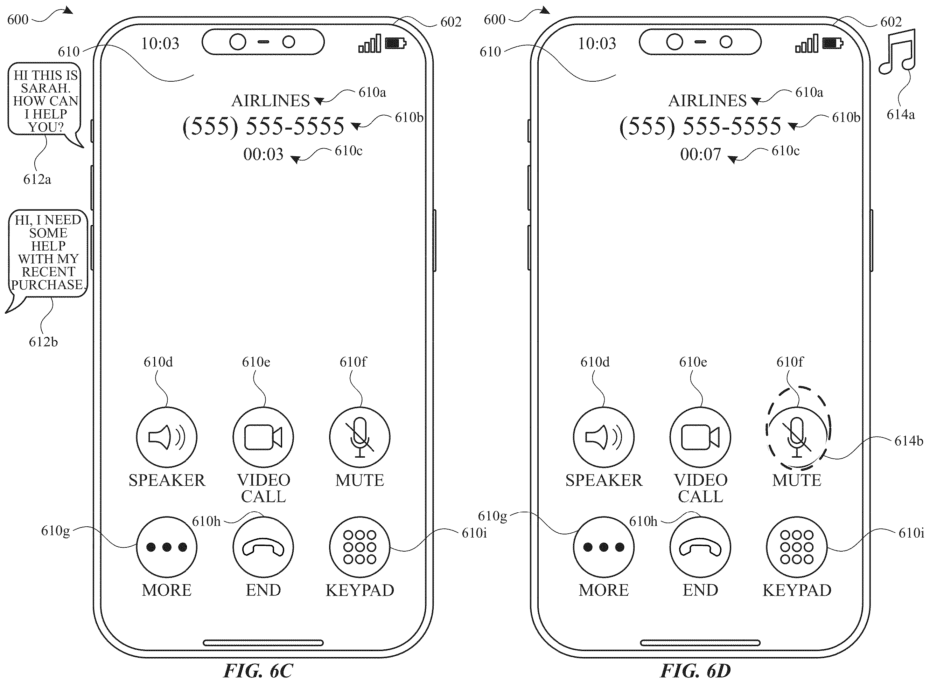

At FIG. 6C, computer system 600 is participants in an active communication session with the participant associated with phone number (555) 555-5555. At FIG. 6C, computer system 600 detects that the other participant in the communication session has transmitted audio content into the communication session, and outputs audio output 612a corresponding to the audio content received from the other participant. At FIG. 6C, computer system 600 also detects that the user of computer system 600 has provided spoken input 612b, and transmits audio content into the communication session corresponding to spoken input 612b. At FIG. 6C, based on a determination that the other participant in the communication session is speaking into the communication session (e.g., audio output 612a) and/or based on a determination that the user of computer system 600 is speaking into the communication session (e.g., audio input 612b), computer system 600 does not display an option to place the communication session on hold.

FIG. 6D depicts an alternative scenario in which computer system 600 detects that criteria are satisfied for automatically displaying an option to place the communication session on hold. At FIG. 6D, computer system 600 detects that the other participant in the communication session is transmitting music (e.g., audio output 614a) into the communication session. In some embodiments, audio output 614a includes music and/or an automated message. Additionally, computer system 600 detects that the user of computer system 600 is not speaking into the communication session (e.g., is not providing spoken input and/or audio input). Additionally, at FIG. 6D, computer system 600 detects user input 614b (e.g., a tap input) corresponding to selection of mute option 610f and/or corresponding to a user request to enable a mute function for the communication session.

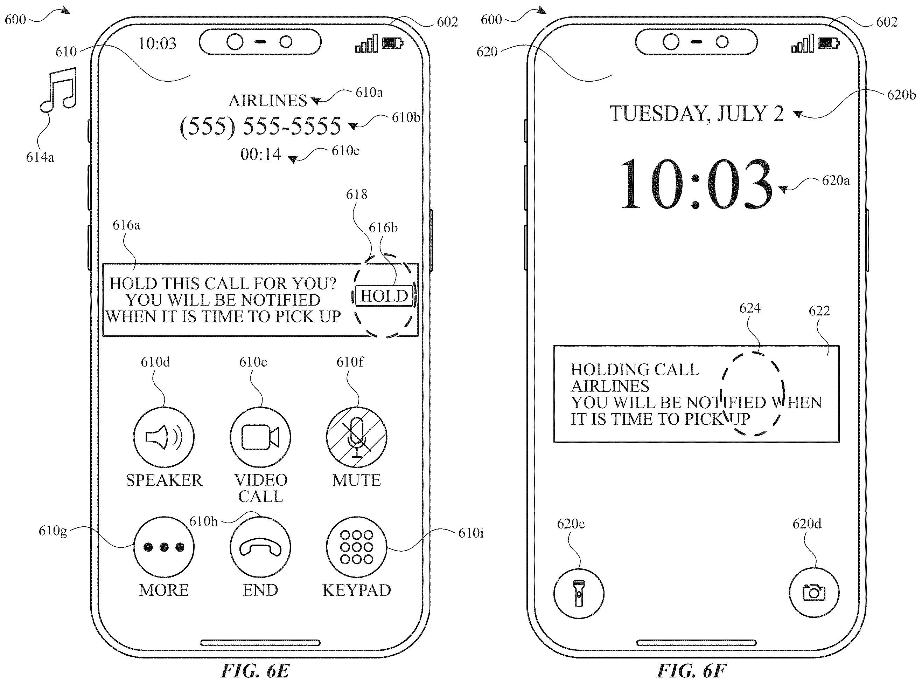

At FIG. 6E, based on a determination that the other participant in the communication session is transmitting music and/or an automated message into the communication session; based on a determination that the user of computer system 600 is not transmitted spoken input into the communication session; and/or based on a determination that the user of computer system 600 has requested to enabled a mute function for the communication session, computer system 600 automatically displays notification 616a and option 616b. Notification 616a asks the user if the user would like to place the communication session on hold. Option 616b, when selected, causes computer system 600 to initiate a process for putting the communication session on hold and/or to put the communication session on hold. At FIG. 6E, computer system 600 detects user input 618 (e.g., a tap input) corresponding to selection of option 616b.

At FIG. 6F, in response to detecting user input 618, computer system 600 places the communication session on hold and, for example, ceases outputting audio output received from the communication session and/or ceases transmitting audio input from computer system 600 into the communication session. Additionally, at FIG. 6F in response to detecting user input 618, computer system 600 ceases display of user interface 610, and displays notification 622 within user interface 620. User interface 620 is a lock screen user interface that indicates that computer system 600 is in a locked state (e.g., a state in which user authentication information is required to unlock one or more features of computer system 600). In FIG. 6F, a user is able to access a flashlight feature of computer system 600 via option 620c and a camera feature of computer system 600 via option 620d, but other features of computer system 600 remain inaccessible until user authentication information is received and the user is authenticated. User interface 620 also includes current information 620a and current date information 620b. Notification 622 indicates that the communication session is on hold, and that the user will be notified when it is time to pick up and/or when a live participant has joined the communication session. At FIG. 6F, computer system 600 detects user input 624 (e.g., a tap input) corresponding to selection of notification 622.

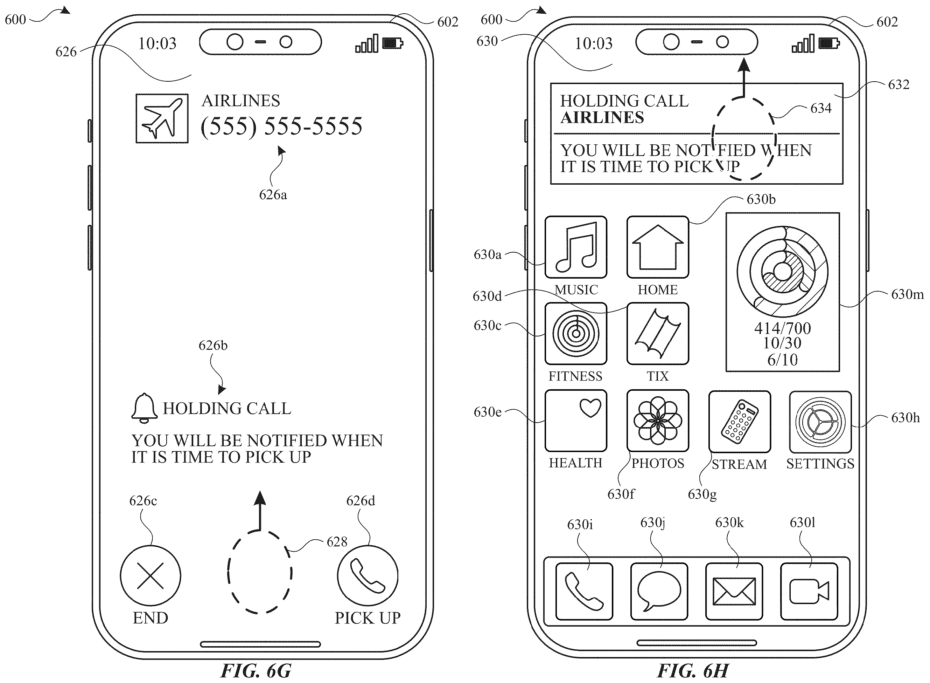

At FIG. 6G, in response to detecting user input 624, computer system 600 displays, via touch-sensitive display 602, user interface 626. In some embodiments, in response to detecting user input 624, computer system 600 displays user interface 626 based on a determination that the user of computer system 600 is authenticated as a known and/or registered user (e.g., based on biometric authentication and/or passcode-based authentication). User interface 626 includes information 626a, indication 626b, option 626c, and option 626d. Information 626a identifies contact information (e.g., phone number and/or contact name) for the communication session that is on hold. Indication 626b indicates that the communication session is on hold and that the user will be notified when it is time to pick up and/or when a live participant has joined the communication session. Option 626c, when selected, causes computer system 600 to initiate a process for ending the hold of the communication session and terminate the communication session. Option 626d, when selected, causes computer system 600 to initiate a process for ending the hold of the communication session and re-connecting computer system 600 to the communication session (e.g., re-start outputting audio content received from the communication session and/or re-start transmitting audio input received at computer system 600 into the communication session). At FIG. 6G, computer system 600 detects user input 628 (e.g., a swipe up input).

At FIG. 6H, in response to detecting user input 628, computer system 600 ceases display of user interface 626, and displays, via touch-sensitive display 602, notification 632 overlaid on user interface 630. User interface 630 is a home screen user interface that includes application icons 630a-6301 which, when selected, cause computer system 600 to open and/or launch a corresponding respective application that corresponds to and/or is associated with the selected application icon (e.g., application icon 630a, when selected, causes computer system 600 to open and/or launch a music application; and application icon 630b, when selected, causes computer system 600 to open and/or launch a home application; and application icon 630c, when selected, causes computer system 600 to open and/or launch a fitness application). User interface 630 also includes fitness widget 630m which displays information from a fitness application and, when selected, causes computer system 600 to open and/or launch the fitness application. Notification 632 indicates that the communication session with "AIRLINES" is currently on hold, and that the user will be notified when it is time to pick up and/or when a live participant joins the communication session. At FIG. 6H, computer system 600 detects user input 634 (e.g., a swipe up input on notification 632).

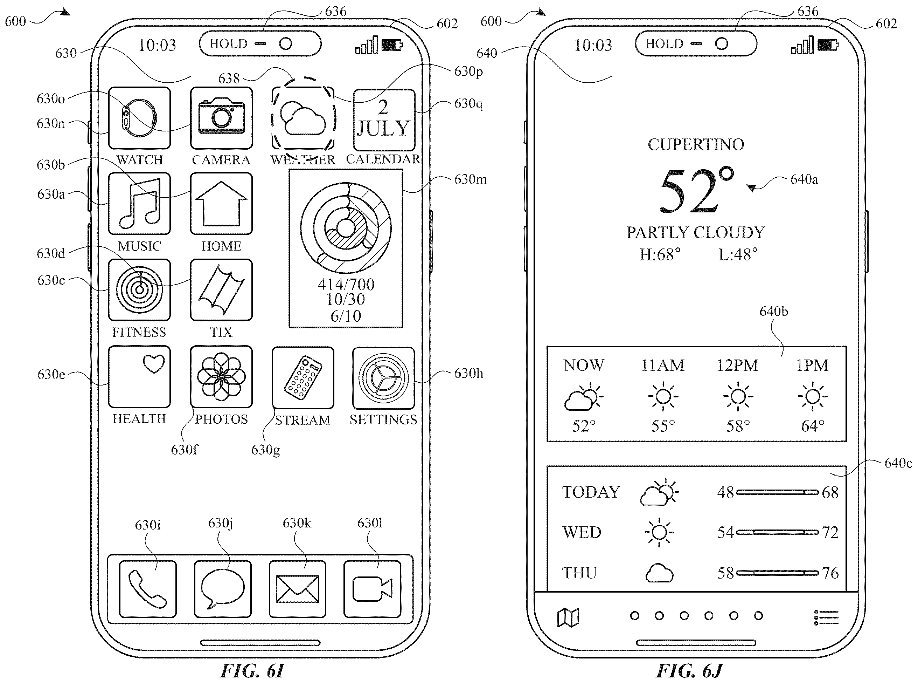

At FIG. 6I, in response to detecting user input 634, computer system 600 shrinks notification 632 into a smaller notification 636. In some embodiments, selection of smaller notification 636 causes computer system 600 to expand smaller notification 636 into notification 632. Additionally, at FIG. 6I, shrinking notification 632 into smaller notification 636 reveals additional application icons 630n, 630o, 630p, 630q of user interface 630. At FIG. 6I, computer system 600 detects user input 638 (e.g., a tap input) corresponding to selection of application icon 630p.

At FIG. 6J, in response to detecting user input 638, computer system 600 ceases display of user interface 630, and displays user interface 640 while maintaining display of notification 636. In some embodiments, user interface 640 is an application user interface that is generated by and/or corresponds to a weather application. User interface 640 includes current weather information 640a, hourly forecast information 640b, and daily forecast information 640c.

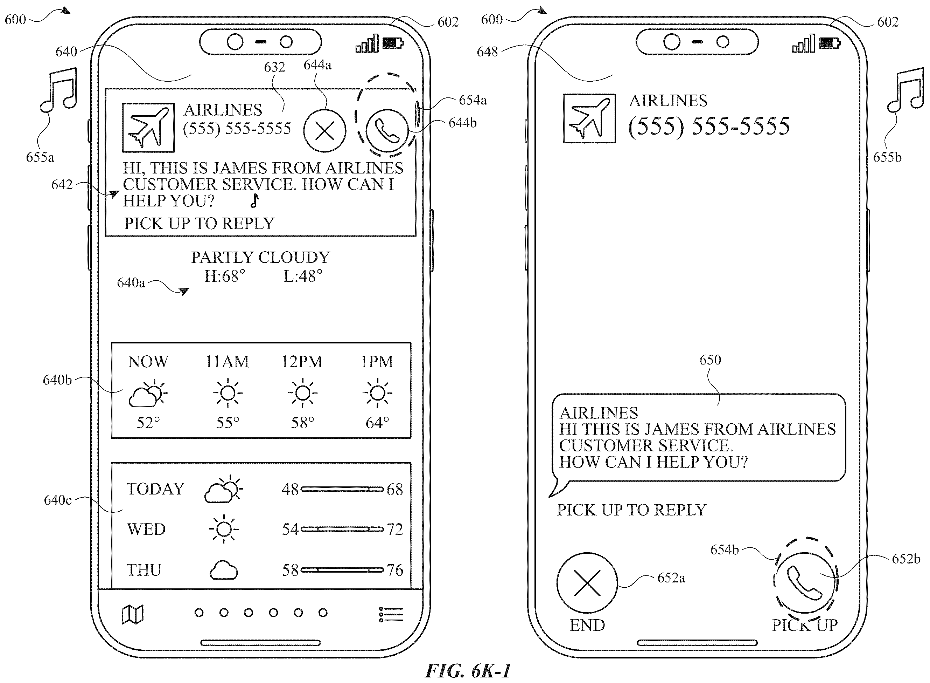

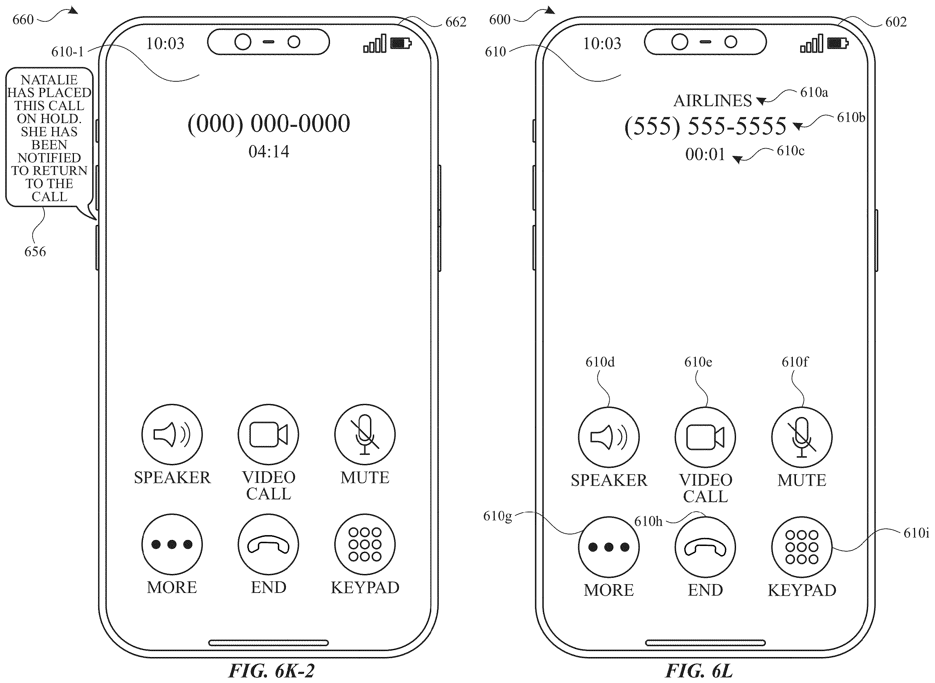

At FIG. 6K-1, computer system 600 determines that other participants in the communication session (currently on hold) have provided spoken input into the communication session. On the left side of FIG. 6K-1, in response to the determination that other participants in the communication session have provided spoken input into the communication session, computer system 600 expands notification 636 into notification 632, and displays, within notification 632, transcript 642, option 644a, and option 644b. Transcript 642 provides a written transcript of the spoken input from other participants in the communication session. In some embodiments, computer system 600 displays a written transcript of the spoken input from the other participants, but still does not output audio content from the communication session, as the communication session is still on hold. Option 644a, when selected, causes computer system 600 to end the hold of the communication session and disconnect the communication session. Option 644b, when selected, causes computer system 600 to end the hold of the communication session and re-connect computer system 600 to the communication session. On the left side of FIG. 6K-1, in response to the determination that other participants in the communication session have provided spoken input into the communication session, computer system 600 also outputs audio output 655a (e.g., a ringtone and/or notification tone) to alert the user that a live participant has spoken into the communication session and it is time to re-connect the communication session.

The right side of FIG. 6K-1 displays another embodiment in which, in response to the determination that other participants in the communication session have provided spoken input into the communication session, computer system 600 ceases display of user interface 640 and notification 636; displays user interface 648; and outputs audio output 655b (e.g., a ringtone and/or notification tone). User interface 648 includes transcript 650, option 652a, and option 652b. Transcript 650 provides a written transcript of the spoken input from other participants in the communication session. In some embodiments, computer system 600 displays a written transcript of the spoken input from the other participants, but still does not output audio content from the communication session, as the communication session is still on hold. Option 652a, when selected, causes computer system 600 to end the hold of the communication session and disconnect the communication session. Option 652b, when selected, causes computer system 600 to end the hold of the communication session and re-connect computer system 600 to the communication session. In some embodiments, selection of notification 632 on the left side of FIG. 6K-1 causes computer system 600 to display user interface 648.

In some embodiments, when a determination is made that another participant in the communication session has provided spoken input into the communication session, computer system 600 and/or a third-party service provider causes a device associated with the other participant to output audio output notifying the other participant that the user of computer system 600 has placed the communication session on hold, and that the user of computer system 600 has been notified to return to the communication session. FIG. 6K-2 illustrates computer system 660, which is a smartphone with touch-sensitive display 662. Computer system 660 is another participant in the communication session with computer system 600. In FIG. 6K-2, based on a determination that the user of computer system 660 and/or computer system 660 has transmitted spoken input in the communication session, computer system 600 and/or a third-party service provider causes computer system 660 to output audio output 656 notifying the user of computer system 660 that the user of computer system 600 has placed the communication session on hold, and that the user of computer system 600 has been notified to return to the communication session.

Returning to the FIG. 6K-1, on the left side of FIG. 6K-1, computer system 600 detects user input 654a (e.g., a tap input) corresponding to selection of option 644b. On the right side of FIG. 6K-1, computer system 600 detects user input 654b (e.g., a tap input) corresponding to selection of option 652b. At FIG. 6L, in response to detecting user input 654a and/or user input 654b, computer system 600 re-connects computer system 600 to the communication session, and displays user interface 610.

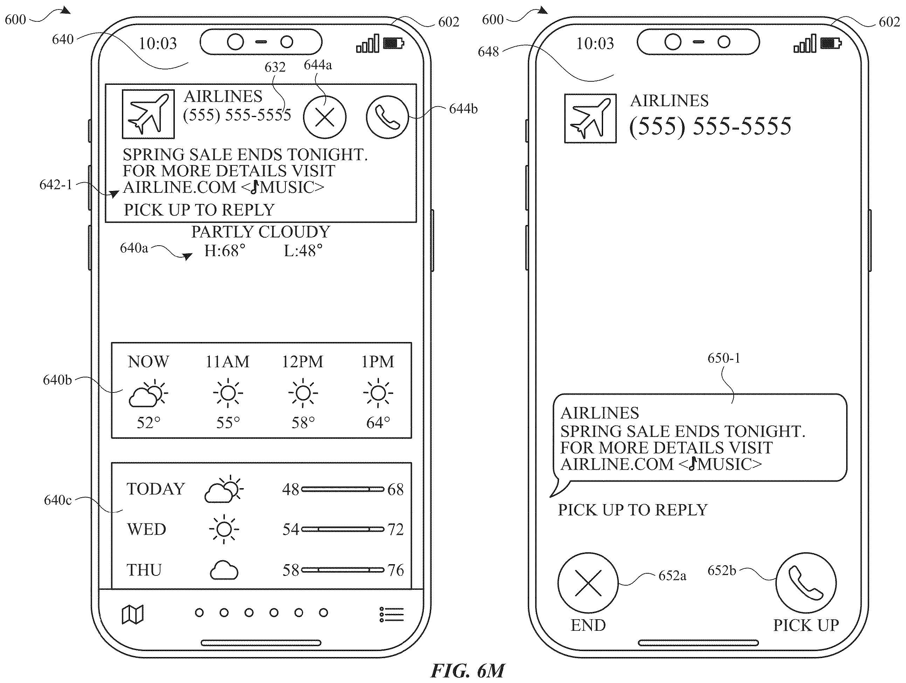

FIG. 6K-1 depicted an example scenario in which audio input from another participant in the communication session included spoken audio that was indicative of a live participant speaking into the communication session. However, FIG. 6M depicts an example scenario in which audio input from another participant in the communication session is determined to be an automated message that is not indicative of a live participant speaking into the communication session. On the left side of FIG. 6M, based on a determination that other participants in the communication session have provided spoken input into the communication session, but that the spoken input is determined not to be indicative of a live participant (e.g., is indicative of an automated message), computer system 600 expands notification 636 into notification 632, and displays, within notification 632, transcript 642-1, option 644a, and option 644b, but computer system 600 does not output audio output. In some embodiments, when a determination is made that spoken input transmitted into the communication session is determined not to be indicative of a live participant (e.g., is indicative of an automated message), computer system 600 also does not display option 644a and option 644b within notification 632.

The right side of FIG. 6M displays another embodiment in which, in response to the determination that other participants in the communication session have provided spoken input into the communication session but the spoken input is not indicative of a live participant (e.g., is indicative of an automated message), computer system 600 displays user interface 648 with transcript 650-1, option 652a, and option 652b, but does not output audio output to alert the user of the spoken input detected in the communication session. In some embodiments, selection of notification 632 on the left side of FIG. 6M causes computer system 600 to display user interface 648.

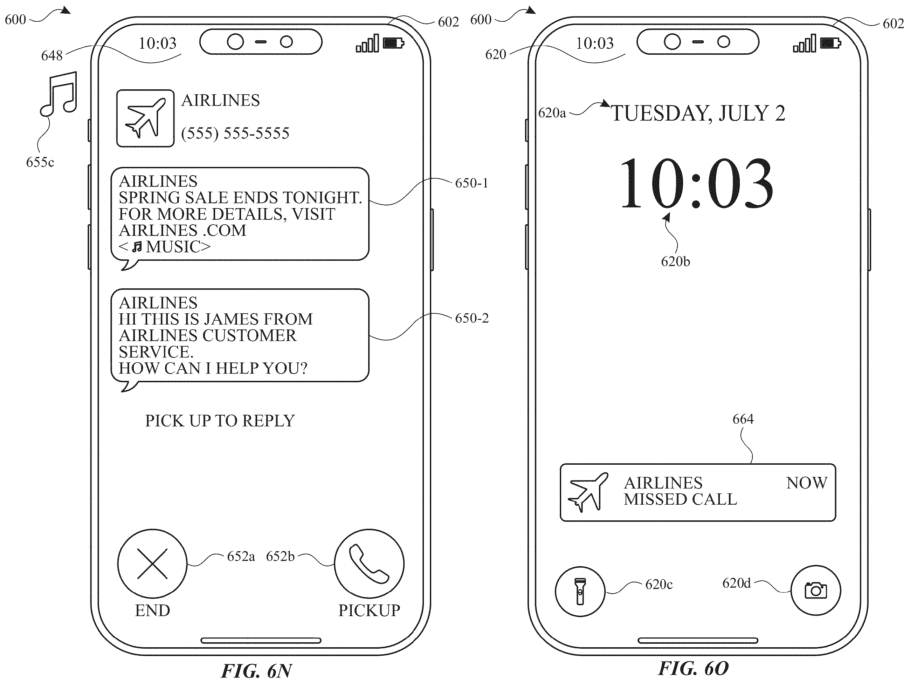

In some embodiments, when additional spoken input is detected within the communication session, computer system 600 updates the transcript in user interface 648 based on the additional spoken input. For example, in FIG. 6N, computer system 600 determines that additional spoken input has been transmitted into the communication session by other participants in the communication session. In response, computer system 600 updates user interface 648 with additional transcript 650-2, which provides a written transcript of the additional detected spoken input. Additionally, whereas computer system 600 did not output audio output in FIG. 6M based on a determination that the spoken input in FIG. 6M was determined not to be indicative of a live participant, in FIG. 6N, computer system 600 outputs audio output 655c (e.g., a ringtone and/or notification tone) based on a determination that the additional spoken input is now indicative of a live participant having spoken into the communication session.

At FIG. 6O, computer system 600 detects that the other participant in the communication session has ended and/or terminated the communication session while the communication session is on hold. For example, in FIG. 6O, the other participant in the communication session has attempted to speak with the user of computer system 600, and computer system 600 has displayed user interface 648 and transcript 650-2 and has output audio output 655c, but the user of computer system 600 has not re-connected computer system 600 to the communication session (e.g., the user has not selected option 652b in FIG. 6N). At FIG. 6O, based on a determination that the other participant in the communication session has ended and/or terminated the communication session while the communication session is on hold, computer system 600 displays, within user interface 620, notification 664, which indicates to the user that the user has missed a call from "AIRLINES" and/or that "AIRLINES" has ended the communication session while the communication session was on hold.

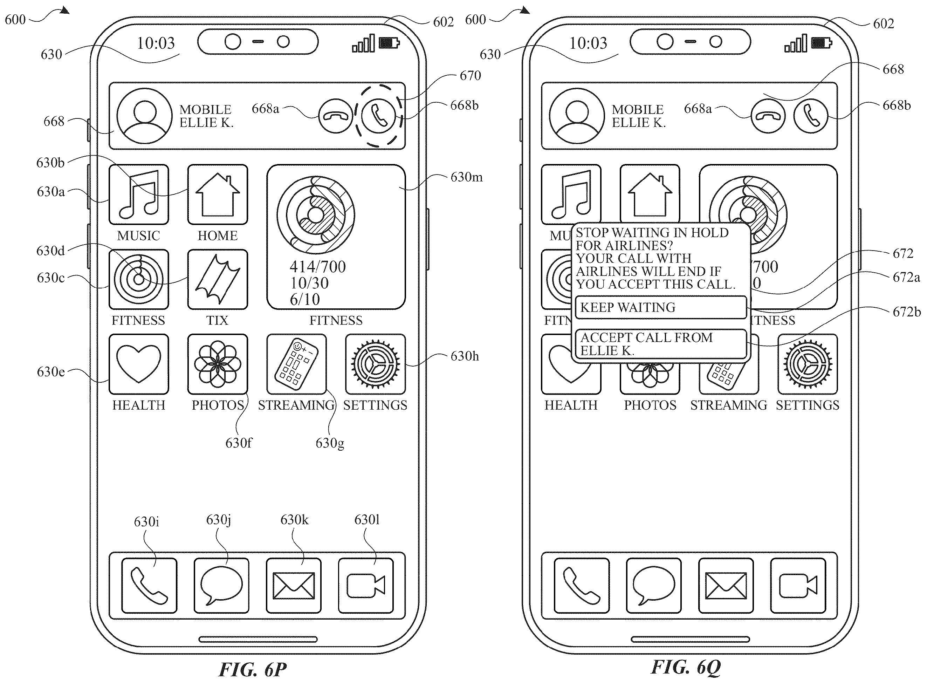

FIG. 6P depicts an example scenario in which the communication session with "AIRLINES" is on hold, and computer system 600 receives a request from another contact named Ellie K. to initiate a new communication session with Ellie K. (e.g., an incoming phone call from Ellie K.). At FIG. 6P, computer system 600 displays notification 668 that is indicative of the incoming communication request from Ellie K. Notification 668 includes option 668a and option 668b. Option 668a, when selected, causes computer system 600 to cease display of notification 668 and forgo initiating the communication session with Ellie K. Option 668b, when selected, causes computer system 600 to initiate a process for initiating the communication session with Ellie K. At FIG. 6P, computer system 600 detects user input 670 (e.g., a tap input) corresponding to selection of option 668b.

At FIG. 6Q, in response to detecting user input 670, and based on a determination that another communication session is currently on hold, computer system 600 displays notification 672. Notification 672 notifies the user that initiating a new communication session with Ellie K. will end the hold of the communication session with "AIRLINES" and will termination the communication session with "AIRLINES." Notification 672 includes option 672a and option 672b. Option 672a, when selected, causes computer system 600 to forgo initiating the communication session with Ellie K. and maintain the active communication session with "AIRLINES" while keeping that communication session on hold. Option 672b, when selected, causes computer system 600 to initiate a new communication session with Ellie K., and terminate the communication session with "AIRLINES."

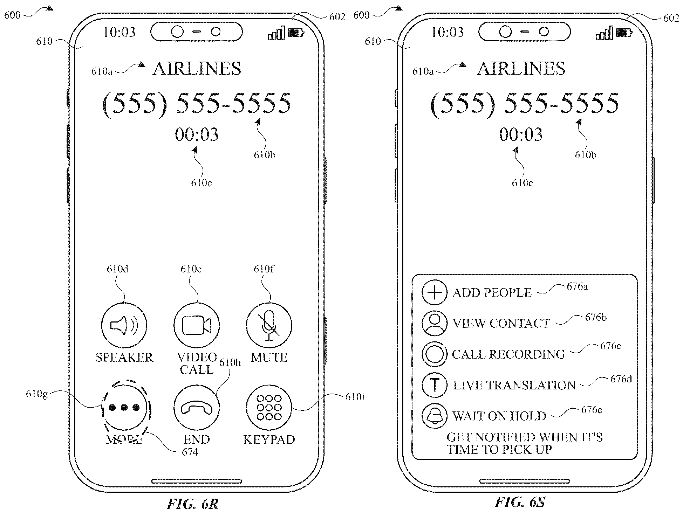

FIG. 6E, discussed above, discussed an example scenario and/or embodiment in which option 616b is displayed within user interface 610 based on satisfaction of certain criteria (e.g., certain criteria indicative of the user of computer system 600 being put on hold by the other participant in the communication session). However, in some embodiments, the certain criteria may not be met and/or option 616b may not be displayed, but the user of computer system 600 still wishes to place the communication session on hold. At FIG. 6R, computer system 600 displays user interface 610 without displaying option 616b (e.g., based on a determination that criteria for displaying option 616b have not been met). At FIG. 6R, computer system 600 detects user input 674 (e.g., a tap input) corresponding to selection of option 610g.

At FIG. 6S, in response to detecting user input 674, computer system 600 displays options 676a-676e. Option 676a, when selected, causes computer system 600 to initiate a process for adding more participants to the communication session. Option 676b, when selected, causes computer system 600 to display additional information about the other participant in the communication session (e.g., "AIRLINES"). Option 676c, when selected, causes computer system 600 to initiate a process for recording audio of the communication session. Option 676d, when selected, causes computer system 600 to initiate a process for displaying a live translation of audio content of the communication session. Option 676e, when selected, causes computer system 600 to initiate a process for putting the communication session on hold and/or causes computer system 600 to put the communication session on hold. In this way, a user is able to put the communication session on hold even when criteria are not met for automatically displaying option 616b within user interface 610.

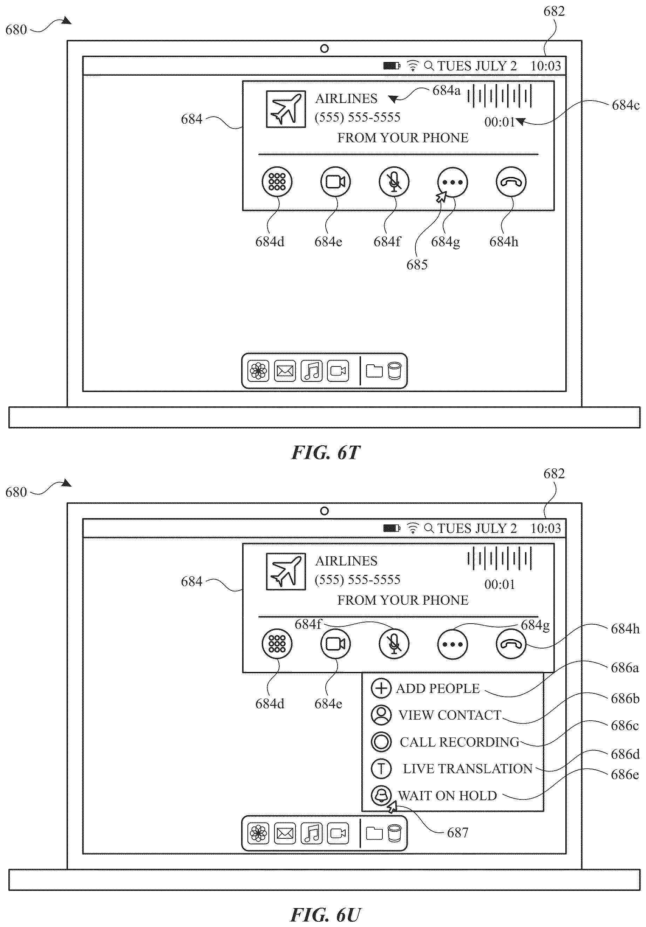

FIGS. 6T-6W depict example embodiments in which some of the features described above are implemented on a different computer system and/or a computer system of a different form. FIG. 6T depicts computer system 680, which is a laptop computer with display 682 and one or more input devices (e.g., a trackpad, a keyboard, and/or mouse). At FIG. 6T, computer system 680 is participating in a communication session with a contact labeled "AIRLINES" associated with phone number (555) 555-5555, and computer system 680 displays, via display 682, user interface 680 that is indicative of the active communication session. User interface 680 includes contact information 684a, and communication session duration information 684c. User interface 684 also includes options 684d-684h. Option 684d, when selected, causes computer system 680 to display a keypad. Option 684e, when selected, causes computer system 680 to initiate a video call with contact "AIRLINES." Option 684f, when selected, causes computer system 680 to enable a mute feature for the communication session. Option 684g, when selected, causes computer system 680 to display additional options. Option 684h, when selected, causes computer system 680 to end the communication session. At FIG. 6T, computer system 680 detects user input 685 corresponding to selection of option 684g.

At FIG. 6U, in response to detecting user input 685, computer system 680 displays options 686a-686e. Option 686a, when selected, causes computer system 680 to initiate a process for adding additional participants to the communication session. Option 686b, when selected, causes computer system 680 to display additional contact information associated with contact "AIRLINES." Option 686c, when selected, causes computer system 680 to initiate audio recording of the communication session. Option 686d, when selected, causes computer system 680 to initiate live translation of audio content of the communication session. Option 686e, when selected, causes computer system 680 to place the communication session on hold. At FIG. 6U, computer system 680 detects user input 687 corresponding to selection of option 686e.

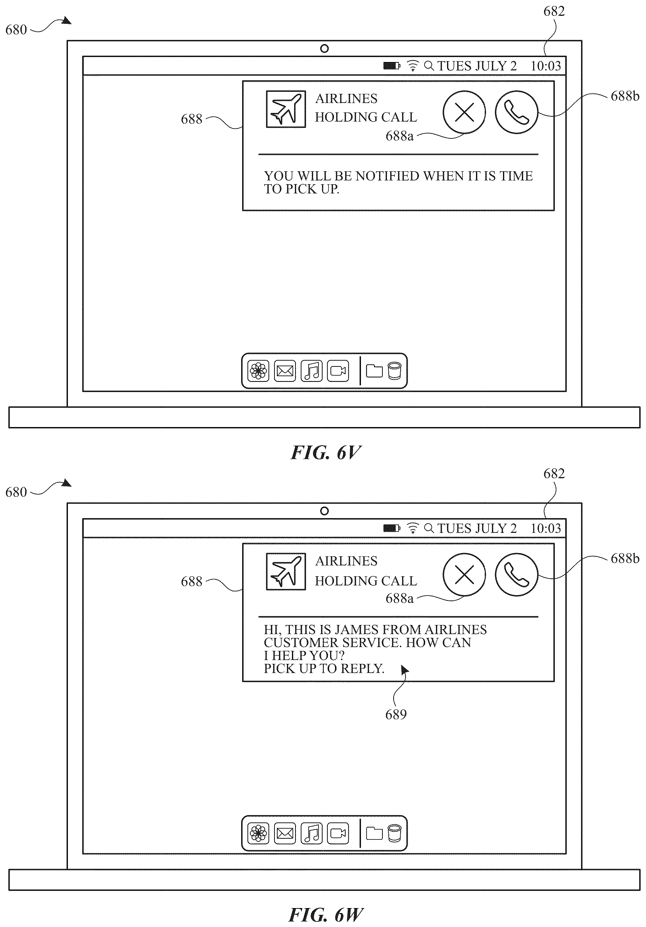

At FIG. 6V, in response to detecting user input 687, computer system 680 places the communication session on hold by, for example, ceasing audio output of audio content received from the communication session and/or ceases transmitting audio content into the communication session, and displays notification 688. Notification 688 indicates that the communication session is on hold, and includes option 688a and option 688b. Option 688a, when selected, causes computer system 680 to end the hold of the communication session and terminate the communication session. Option 688b, when selected, causes computer system 680 to end the hold of the communication session and re-connect to the communication session.

At FIG. 6W, computer system 680 receives information indicating that other participants in the communication session have transmitted spoken input into the communication session. In response to receiving this information, computer system 680 updates notification 688 to display transcript 689, which provides a written transcript of the spoken input transmitted into the communication session by other participants. In some embodiments, in response to receiving the information indicating that other participants in the communication session have transmitted spoken input into the communication session (and, in some embodiments, based on a determination that the spoken input is indicative of a live participant and not an automated message), computer system 680 outputs audio output to notify the user of computer system 680 that it may be time to re-connect to the communication session.

FIG. 7 is a flow diagram illustrating a method for providing communications user interfaces using a computer system in accordance with some embodiments. Method 700 is performed at a computer system (e.g., 100, 300, 500, 600, and/or 682) (e.g., a smart phone, a smart watch, a tablet, a laptop, a desktop, a wearable device, wrist-worn device, and/or head-mounted device) that is in communication with one or more display generation components (e.g., 602 and/or 682) (e.g., a display, a touch-sensitive display, and/or a display controller) and one or more input devices (e.g., 602) (e.g., a touch-sensitive surface, a touch-sensitive display, a button, a rotatable input mechanism, a depressible and rotatable input mechanism, a camera, an accelerometer, and/or an inertial measurement unit (IMU)). Some operations in method 700 are, optionally, combined, the orders of some operations are, optionally, changed, and some operations are, optionally, omitted.

As described below, method 700 provides an intuitive way for providing communications user interfaces. The method reduces the cognitive burden on a user for using electronic devices for communications, thereby creating a more efficient human-machine interface. For battery-operated computing devices, enabling a user to use electronic devices for communications more efficiently conserves power and increases the time between battery charges.

The computer system (e.g., 600) displays (702), via the one or more display generation components (e.g., 602), a call user interface (e.g., 610), wherein the call user interface is indicative of the computer system participating in an active communication session (e.g., an active communication session with one or more remote computer systems separate from the computer system and/or one or more remote users separate from and/or remote from the computer system; an active telephone call; an active voice-based communication session; and/or an active video-based communication session). While displaying the call user interface, the computer system detects (704), via the one or more input devices, first audio content (e.g., 612a, 612b, and/or 614a) corresponding to the active communication session (e.g., audio content that is transmitted into the active communication session by the computer system, the user of the computer system, one or more other participants in the active communication system, and/or one or more remote devices separate from the computer system that are participating in the active communication session). In response to detecting the first audio content corresponding to the active communication session (706): in accordance with a determination that the active communication session satisfies a first set of one or more hold criteria (708), the computer system displays (710), via the one or more display generation components (e.g., 602) (and, optionally, within the call user interface), a hold option (e.g., 616b) that, when selected, causes the computer system to initiate a process for putting the active communication session on hold (e.g., in some embodiments, causes the computer system to put the active communication session on hold) (e.g., FIGS. 6E-6N), wherein the determination that the active communication session satisfies the first set of one or more hold criteria includes one or more determinations pertaining to the first audio content (e.g., one or more determinations pertaining to the content of the first audio content) corresponding to the active communication session; and in accordance with a determination that the active communication session does not satisfy the first set of one or more hold criteria (712), the computer system forgoes display (714) of the hold option (e.g., FIG. 6C) (e.g., in some embodiments, maintains display of the call user interface (e.g., 610) without displaying the hold option). In some embodiments, the determination that the active communication session does not satisfy the first set of one or more hold criteria includes one or more determinations pertaining to the first audio content corresponding to the active communication session. In some embodiments, the determination that the active communication session satisfies the first set of one or more hold criteria includes a determination that the first audio content includes music (e.g., in some embodiments, includes music that is transmitted into the active communication session by one or more remote devices separate from the computer system). In some embodiments, the determination that the active communication session does not satisfy the first set of one or more hold criteria includes a determination that the first audio content does not include music and/or does not include music that is transmitted into the active communication session by one or more remote devices separate from the computer system. In some embodiments, the determination that the active communication session satisfies the first set of one or more hold criteria includes a determination that the first audio content does not include spoken input provided by a user of the computer system and/or does not include spoken input transmitted into the active communication session by the computer system. In some embodiments, the determination that the active communication session does not satisfy the first set of one or more hold criteria includes a determination that the first audio content includes spoken input provided by a user of the computer system and/or includes spoken input transmitted into the active communication session by the computer system. In some embodiments, the determination that the active communication session satisfies the first set of one or more hold criteria includes a determination that the computer system is muted (e.g., the computer system is not transmitting audio content into the active communication session and/or a mute option is enabled on the computer system). In some embodiments, the determination that the active communication session does not satisfy the first set of one or more hold criteria includes a determination that the computer system is not muted (e.g., the computer system is transmitting audio content into the active communication session and/or a mute option is not enabled on the computer system). In some embodiments, while the communication session is active and is not on hold, the computer system outputs audio output corresponding to audio input and/or spoken input transmitted into the active communication session by one or more participants of the computer system (e.g., one or more signals representative of audio input and/or spoken input transmitted into the active communication session by the one or more participants) and/or the computer system transmits audio input (e.g., one or more signals representative of audio input and/or that corresponds to audio input) into the communication session (e.g., for output by one or more remote devices participating in the communication session) based on audio input received at the computer system. In some embodiments, while the active communication session is on hold, the communication session remains active (e.g., the communication session does not end and/or the communication session continues), but the computer system does not output audio output that corresponds to the active communication session, does not output audio output that corresponds to audio input that is transmitted into the active communication session (e.g., by one or more participants of the active communication session), and/or does not transmit audio input (e.g., does not transmit one or more signals representative of audio input) into the communication session based on audio input received at the computer system. Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by displaying the hold option when criteria are met) enhances the operability of the device by reducing the number of inputs and time required to perform a particular operation, reducing energy usage by the device.

In some embodiments, while displaying the hold option (e.g., 616b), the computer system (e.g., 600) detects, via the one or more input devices, one or more user inputs (e.g., 618) (e.g., one or more touch inputs, one or more tap inputs, one or more gesture inputs, one or more spoken inputs, one or more button press inputs, one or more rotational inputs, and/or one or more hardware control inputs) corresponding to selection of the hold option. In response to detecting the one or more user inputs corresponding to selection of the hold option, the computer system: initiates the process for putting the active communication session on hold; and displays, via the one or more display generation components (e.g., 602), a visual indication (e.g., 622, 626, 626b, 632, and/or 636) that the active communication session is on hold (e.g., a visual indication that the active communication session is active (e.g., the connection with one or more other remote participants in the active communication session is maintained and/or is not terminated) but on hold). In some embodiments, putting the active communication session on hold comprises ceasing transmission of audio content into the active communication session and/or ceasing audio output from the active communication session. In some embodiments, while the active communication session is on hold, the computer system ceases to be directly connected to the active communication session, but a third-party service provider maintains the active communication session with one or more other remote participants in the active communication session. In some embodiments, while the active communication session is on hold, the computer system maintains a connection with the active communication session, but does not transmit audio content into the active communication session and does not generate audio output of audio content from the active communication session. Providing improved feedback (such as by displaying an indication that the communication session is active but on hold) enhances the operability of the device by reducing accidental and mistaken inputs, reducing energy usage by the device.

In some embodiments, in response to detecting the one or more user inputs (e.g., 618) corresponding to selection of the hold option (e.g., 616b), the computer system (e.g., 600) ceases audio output corresponding to the active communication session (e.g., from FIG. 6E to FIG. 6F, computer system 600 ceases output audio output 614a) (e.g., in some embodiments, placing the active communication session on hold comprises ceasing audio output corresponding to the active communication session and/or ceasing transmission of audio content into the active communication session). Ceasing audio output from the communication session when the phone call is on hold reduces energy usage by the device.

In some embodiments, while the active communication session is on hold (e.g., in some embodiments, while displaying the visual indication that the active communication session is on hold and/or displaying a different visual indication that the active communication session is on hold), the computer system concurrently displays, via the one or more display generation components: a second visual indication (e.g., 632 and/or 636) that the active communication session is on hold (e.g., a second visual indication that is the same as the visual indication that the active communication session is on hold or that is different from the visual indication that the active communication session is on hold); and a first user interface (e.g., 630 and/or 640) that is different from the call user interface (e.g., 610). Providing improved feedback (such as by displaying an indication that the communication session is active but on hold) enhances the operability of the device by reducing accidental and mistaken inputs, reducing energy usage by the device.

In some embodiments, the first user interface is a lock screen user interface (e.g., 620, FIG. 6F) that is indicative of the computer system (e.g., 600) being in a locked state (e.g., a state in which user authentication information (e.g., passcode-based authentication information and/or biometric authentication information) is required to transition the computer system into an unlocked state; and/or a locked state of the computer system that includes access to fewer features than in an unlocked state of the computer system). Providing improved feedback (such as by displaying an indication that the communication session is active but on hold) enhances the operability of the device by reducing accidental and mistaken inputs, reducing energy usage by the device.

In some embodiments, the first user interface is a home screen user interface (e.g., 630, FIG. 6H and/or FIG. 6I) that includes a plurality of application icons (e.g., 630a-630q), including: a first application icon (e.g., 630a) that, when selected, causes the computer system to launch a first application; and second application icon (e.g., 630b) that, when selected, causes the computer system to launch a second application different from the first application. Providing improved feedback (such as by displaying an indication that the communication session is active but on hold) enhances the operability of the device by reducing accidental and mistaken inputs, reducing energy usage by the device.

In some embodiments, the first user interface is a first application user interface (e.g., 640) corresponding to a first application (e.g., a first application that is installed on the computer system). Providing improved feedback (such as by displaying an indication that the communication session is active but on hold) enhances the operability of the device by reducing accidental and mistaken inputs, reducing energy usage by the device. Furthermore, ceasing audio output of the communication session when the communication session is on hold reduces energy usage by the device.

In some embodiments, while the active communication session is on hold (e.g., in some embodiments, while displaying the visual indication that the active communication session is on hold and/or displaying a different visual indication that the active communication session is on hold), the computer system receives an indication of audio content being transmitted into the active communication session by one or more other participants in the active communication session separate from the computer system (e.g., separate from the user of the computer system) (e.g., FIG. 6K-1). In response to receiving the indication of audio content being transmitted into the active communication session by the one or more other participants in the active communication session, the computer system displays, via the one or more display generation components, a transcript (e.g., 642 and/or 650) that is descriptive of the audio content being transmitted into the active communication session by the one or more other participants in the active communication session. In some embodiments, the transcript includes a text transcription of detected speech and/or detected words spoken into the active communication session by one or more other participants in the communication session. In some embodiments, the transcript is displayed within the visual indication that the active communication session is on hold. In some embodiments, the transcript is displayed within a call hold user interface that is indicative of the active communication session being on hold. Providing improved feedback (such as by displaying a transcript of detected speech in the communication session when the communication session is on hold) enhances the operability of the device by reducing accidental and mistaken inputs, reducing energy usage by the device.

In some embodiments, the determination that the active communication session satisfies the first set of one or more hold criteria includes a determination that one or more other participants in the active communication session are transmitting music (e.g., 614a) into the active communication session. In some embodiments, the one or more hold criteria includes a hold music criterion that is satisfied when one or more other participants in the active communication session are transmitting music into the active communication session, and is not satisfied when no participants in the active communication session are transmitting music into the active communication session. In some embodiments, the hold music criterion is a necessary criterion that must be met in order for the first set of one or more hold criteria to be satisfied. In some embodiments, the first set of one or more hold criteria can be satisfied even when the hold music criterion is not satisfied (e.g., based on satisfaction of other criterion in the first set of one or more hold criteria). Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by displaying the hold option when criteria are met) enhances the operability of the device by reducing the number of inputs and time required to perform a particular operation, reducing energy usage by the device.

In some embodiments, the determination that the active communication session satisfies the first set of one or more hold criteria includes a determination that the user of the computer system is not transmitting spoken audio input into the active communication session (e.g., FIG. 6D) (e.g., a determination that the user of the computer system is not speaking). In some embodiments, the one or more hold criteria includes a user speech criterion that is satisfied when the user of the computer system is not transmitting spoken audio input into the active communication session, and is not satisfied when the user of the computer system is transmitting spoken audio input into the active communication session. In some embodiments, the user speech criterion is a necessary criterion that must be met in order for the first set of one or more hold criteria to be satisfied. In some embodiments, the first set of one or more hold criteria can be satisfied even when the user speech criterion is not satisfied (e.g., based on satisfaction of other criterion in the first set of one or more hold criteria). Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by displaying the hold option when criteria are met) enhances the operability of the device by reducing the number of inputs and time required to perform a particular operation, reducing energy usage by the device.

In some embodiments, the determination that the active communication session satisfies the first set of one or more hold criteria includes a determination that participants in the active communication session are not transmitting spoken audio input into the active communication session (e.g., FIG. 6D) (e.g., a determination that none of the participants in the active communication session, including the user of the computer system and one or more other participants, are not speaking). In some embodiments, the one or more hold criteria includes a participant speech criterion that is satisfied when none of the participants in the active communication session are transmitting spoken audio input into the active communication session, and is not satisfied when one or more participants in the active communication session are transmitting spoken audio input into the active communication session. In some embodiments, the participant speech criterion is a necessary criterion that must be met in order for the first set of one or more hold criteria to be satisfied. In some embodiments, the first set of one or more hold criteria can be satisfied even when the participant speech criterion is not satisfied (e.g., based on satisfaction of other criterion in the first set of one or more hold criteria). Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by displaying the hold option when criteria are met) enhances the operability of the device by reducing the number of inputs and time required to perform a particular operation, reducing energy usage by the device.

In some embodiments, the determination that the active communication session satisfies the first set of one or more hold criteria includes a determination that one or more participants in the active communication session are transmitting an automated message into the active communication session (e.g., in some embodiments, audio output 614a includes an automated message) (e.g., based on one or more machine learning models and/or one or more models trained to identify speech patterns and/or audio patterns indicative of an automated message). In some embodiments, the one or more hold criteria includes an automated message criterion that is satisfied when one or more participants in the active communication session are transmitting an automated message into the active communication session, and is not satisfied when no participants in the active communication session are transmitting an automated message into the active communication session. In some embodiments, the automated message criterion is a necessary criterion that must be met in order for the first set of one or more hold criteria to be satisfied. In some embodiments, the first set of one or more hold criteria can be satisfied even when the automated message criterion is not satisfied (e.g., based on satisfaction of other criterion in the first set of one or more hold criteria). Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by displaying the hold option when criteria are met) enhances the operability of the device by reducing the number of inputs and time required to perform a particular operation, reducing energy usage by the device.

In some embodiments, the determination that the active communication session satisfies the first set of one or more hold criteria includes a determination that the user of the computer system (e.g., 600) has enabled a mute option (e.g., 610f) for the active communication session (e.g., user input 614b) (e.g., the user of the computer system has muted himself or herself; and/or the user of the computer system has enabled a mute option that prevents the computer system from transmitting audio content into the active communication session). In some embodiments, the one or more hold criteria includes a mute criterion that is satisfied when a mute option for the computer system and/or for the active communication session is enabled, and is not satisfied when the mute option is not enabled. In some embodiments, the mute criterion is a necessary criterion that must be met in order for the first set of one or more hold criteria to be satisfied. In some embodiments, the first set of one or more hold criteria can be satisfied even when the mute criterion is not satisfied (e.g., based on satisfaction of other criterion in the first set of one or more hold criteria). Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by displaying the hold option when criteria are met) enhances the operability of the device by reducing the number of inputs and time required to perform a particular operation, reducing energy usage by the device.

In some embodiments, while displaying the call user interface (e.g., 610) without displaying the hold option (e.g., 616b), the computer system (e.g., 600) detects, via the one or more input devices, one or more user inputs (e.g., 674 and/or user input selecting option 676e in FIG. 6S) (e.g., one or more touch inputs, one or more tap inputs, one or more gesture inputs, one or more spoken inputs, one or more button press inputs, one or more rotational inputs, and/or one or more hardware control inputs) corresponding to a user request to put the active communication session on hold. In response to detecting the one or more user inputs corresponding to the user request to put the active communication session on hold (e.g., selection of option 676e in FIG. 6S), the computer system initiates the process for putting the active communication session on hold; and displays, via the one or more display generation components, a visual indication (e.g., 622, 626, 626b, 632, and/or 636) that the active communication session is on hold (e.g., a visual indication that the active communication session is active (e.g., the connection with one or more other remote participants in the active communication session is maintained and/or is not terminated) but on hold). In some embodiments, even when the hold option is not automatically displayed (e.g., even when the first set of hold criteria are not satisfied), a user is able to access and/or select an option to put the active communication session on hold. In some embodiments, putting the active communication session on hold comprises ceasing transmission of audio content into the active communication session and/or ceasing audio output from the active communication session. In some embodiments, while the active communication session is on hold, the computer system ceases to be directly connected to the active communication session, but a third-party service provider maintains the active communication session with one or more other remote participants in the active communication session. In some embodiments, while the active communication session is on hold, the computer system maintains a connection with the active communication session, but does not transmit audio content into the active communication session and does not generate audio output of audio content from the active communication session. Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by displaying the hold option when criteria are met) enhances the operability of the device by reducing the number of inputs and time required to perform a particular operation, reducing energy usage by the device.

Note that details of the processes described above with respect to method 700 (e.g., FIG. 7) are also applicable in an analogous manner to the methods described below. For example, method 800 optionally includes one or more of the characteristics of the various methods described above with reference to method 700. For example, in some embodiments, the call user interface recited in method 700 is the call user interface recited in method 800. In another example, in some embodiments, the active communication session recited in method 700 is the active communication session recited in method 800. For brevity, these details are not repeated below.

FIG. 8 is a flow diagram illustrating a method for providing communications user interfaces using a computer system in accordance with some embodiments. Method 800 is performed at a computer system (e.g., 100, 300, 500, 600, and/or 680) (e.g., a smart phone, a smart watch, a tablet, a laptop, a desktop, a wearable device, wrist-worn device, and/or head-mounted device) that is in communication with one or more display generation components (e.g., 602 and/or 682) (e.g., a display, a touch-sensitive display, and/or a display controller)and one or more input devices (e.g., 602) (e.g., a touch-sensitive surface, a touch-sensitive display, a button, a rotatable input mechanism, a depressible and rotatable input mechanism, a camera, an accelerometer, and/or an inertial measurement unit (IMU)). Some operations in method 800 are, optionally, combined, the orders of some operations are, optionally, changed, and some operations are, optionally, omitted.

As described below, method 800 provides an intuitive way for providing communications user interfaces. The method reduces the cognitive burden on a user for using electronic devices for communications, thereby creating a more efficient human-machine interface. For battery-operated computing devices, enabling a user to use electronic devices for communications more efficiently conserves power and increases the time between battery charges.

The computer system (e.g., 600) displays (802), via the one or more display generation components (e.g., 602), a call user interface (e.g., 610), wherein the call user interface is indicative of the computer system participating in an active communication session (e.g., an active communication session with one or more remote computer systems separate from the computer system and/or one or more remote users separate from and/or remote from the computer system; an active telephone call; an active voice-based communication session; and/or an active video-based communication session). While displaying the call user interface (e.g., 610), the computer system (e.g., 600) detects (804), via the one or more input devices (e.g., 602), a first set of one or more user inputs (e.g., one or more touch inputs, one or more button presses, one or more rotational inputs, one or more gesture inputs, and/or one or more spoken inputs), wherein the first set of one or more user inputs includes one or more user inputs corresponding to a user request to put the active communication session on hold (e.g., user input 618, user input 674, and/or user input selecting option 676e in FIG. 6S). In response to detecting the first set of one or more user inputs (806), the computer system concurrently displays (808), via the one or more display generation components: a first visual indication (e.g., 622, 632, and/or 636) indicative of the active communication session being on hold (810) (e.g., a first visual indication that indicates that the active communication session is on hold and/or a first visual indication that states that the active communication session is on hold); and a first user interface (e.g., 620, 630, and/or 640) that is different from the call user interface (e.g., 610) and does not pertain to the active communication session (812) (e.g., a first user interface that corresponds to a first application and/or a first system feature that is not required for the active communication session, does not control the active communication session, and/or is not related to the active communication session). In some embodiments, while the communication session is active and is not on hold, the computer system outputs audio output corresponding to audio input and/or spoken input transmitted into the active communication session by one or more participants of the computer system (e.g., one or more signals representative of audio input and/or spoken input transmitted into the active communication session by the one or more participants) and/or the computer system transmits audio input (e.g., one or more signals representative of audio input and/or that corresponds to audio input) into the communication session (e.g., for output by one or more remote devices participating in the communication session) based on audio input received at the computer system. In some embodiments, while the active communication session is on hold, the communication session remains active (e.g., the communication session does not end and/or the communication session continues), but the computer system does not output audio output that corresponds to the active communication session, does not output audio output that corresponds to audio input that is transmitted into the active communication session (e.g., by one or more participants of the active communication session), and/or does not transmit audio input (e.g., does not transmit one or more signals representative of audio input) into the communication session based on audio input received at the computer system. Providing improved feedback (such as by displaying an indication that the communication session is active but on hold) enhances the operability of the device by reducing accidental and mistaken inputs, reducing energy usage by the device. Furthermore, displaying a first user interface while the communication session is on hold improves the operability of the device, and allows the user to perform other tasks and/or functions while the call is on hold.

In some embodiments, while displaying the call user interface (e.g., 610), and prior to detecting the first set of one or more user inputs, the computer system detects, via the one or more input devices, first audio content (e.g., 612a, 612b, and/or 614a) corresponding to the active communication session (e.g., audio content that is transmitted into the active communication session by the computer system, the user of the computer system, one or more other participants in the active communication system, and/or one or more remote devices separate from the computer system that are participating in the active communication session). In response to detecting the first audio content corresponding to the active communication session: in accordance with a determination that the active communication session satisfies a first set of one or more hold criteria (e.g., FIGS. 6D-6E), the computer system displays, via the one or more display generation components (and, optionally, within the call user interface), a hold option (e.g., 616b) that, when selected, causes the computer system to initiate a process for putting the active communication session on hold (e.g., in some embodiments, causes the computer system to put the active communication session on hold), wherein the determination that the active communication satisfies the first set of one or more hold criteria includes one or more determinations pertaining to the first audio content (e.g., one or more determinations pertaining to the content of the first audio content) corresponding to the active communication session. In some embodiments, in accordance with a determination that the active communication session does not satisfy the first set of one or more hold criteria (e.g., FIG. 6B), the computer system forgoes display of the hold option (e.g., in FIG. 6B, option 616b is not displayed) (e.g., in some embodiments, maintains display of the call user interface (e.g., 610) without displaying the hold option). In some embodiments, the determination that the active communication session does not satisfy the first set of one or more hold criteria includes one or more determinations pertaining to the first audio content corresponding to the active communication session. In some embodiments, the first set of one or more user inputs includes one or more user inputs (e.g., 618) corresponding to selection of the hold option. In some embodiments, the determination that the active communication session satisfies the first set of one or more hold criteria includes a determination that the first audio content includes music (e.g., 614a) (e.g., in some embodiments, includes music that is transmitted into the active communication session by one or more remote devices separate from the computer system). In some embodiments, the determination that the active communication session does not satisfy the first set of one or more hold criteria includes a determination that the first audio content does not include music and/or does not include music that is transmitted into the active communication session by one or more remote devices separate from the computer system. In some embodiments, the determination that the active communication session satisfies the first set of one or more hold criteria includes a determination that the first audio content does not include spoken input provided by a user of the computer system and/or does not include spoken input transmitted into the active communication session by the computer system. In some embodiments, the determination that the active communication session does not satisfy the first set of one or more hold criteria includes a determination that the first audio content includes spoken input provided by a user of the computer system and/or includes spoken input transmitted into the active communication session by the computer system. In some embodiments, the determination that the active communication session satisfies the first set of one or more hold criteria includes a determination that the computer system is muted (e.g., the computer system is not transmitting audio content into the active communication session and/or a mute option is enabled on the computer system). In some embodiments, the determination that the active communication session does not satisfy the first set of one or more hold criteria includes a determination that the computer system is not muted (e.g., the computer system is transmitting audio content into the active communication session and/or a mute option is not enabled on the computer system). In some embodiments, while the communication session is active and is not on hold, the computer system outputs audio output corresponding to audio input and/or spoken input transmitted into the active communication session by one or more participants of the computer system (e.g., one or more signals representative of audio input and/or spoken input transmitted into the active communication session by the one or more participants) and/or the computer system transmits audio input (e.g., one or more signals representative of audio input and/or that corresponds to audio input) into the communication session (e.g., for output by one or more remote devices participating in the communication session) based on audio input received at the computer system. In some embodiments, while the active communication session is on hold, the communication session remains active (e.g., the communication session does not end and/or the communication session continues), but the computer system does not output audio output that corresponds to the active communication session, does not output audio output that corresponds to audio input that is transmitted into the active communication session (e.g., by one or more participants of the active communication session), and/or does not transmit audio input (e.g., does not transmit one or more signals representative of audio input) into the communication session based on audio input received at the computer system. Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by automatically displaying the hold option when criteria are met) enhances the operability of the device by reducing the number of inputs and time required to perform a particular operation, reducing energy usage by the device.

In some embodiments, the determination that the active communication session satisfies the first set of one or more hold criteria includes: a determination that one or more other participants in the active communication session are transmitting music (e.g., 614a) into the active communication session; and a determination that the user of the computer system (e.g., 600) is not transmitting spoken audio input into the active communication session (e.g., a determination that the user of the computer system is not speaking) (e.g., FIGS. 6D-6E). In some embodiments, the one or more hold criteria includes a hold music criterion that is satisfied when one or more other participants in the active communication session are transmitting music into the active communication session, and is not satisfied when no participants in the active communication session are transmitting music into the active communication session. In some embodiments, the hold music criterion is a necessary criterion that must be met in order for the first set of one or more hold criteria to be satisfied. In some embodiments, the first set of one or more hold criteria can be satisfied even when the hold music criterion is not satisfied (e.g., based on satisfaction of other criterion in the first set of one or more hold criteria). In some embodiments, the one or more hold criteria includes a user speech criterion that is satisfied when the user of the computer system is not transmitting spoken audio input into the active communication session, and is not satisfied when the user of the computer system is transmitting spoken audio input into the active communication session. In some embodiments, the user speech criterion is a necessary criterion that must be met in order for the first set of one or more hold criteria to be satisfied. In some embodiments, the first set of one or more hold criteria can be satisfied even when the user speech criterion is not satisfied (e.g., based on satisfaction of other criterion in the first set of one or more hold criteria). Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by automatically displaying the hold option when criteria are met) enhances the operability of the device by reducing the number of inputs and time required to perform a particular operation, reducing energy usage by the device.

In some embodiments, while displaying the call user interface (e.g., 610) without displaying the hold option (e.g., 616b), the computer system (e.g., 600) detects, via the one or more input devices, one or more user inputs (e.g., one or more touch inputs, one or more tap inputs, one or more gesture inputs, one or more spoken inputs, one or more button press inputs, one or more rotational inputs, and/or one or more hardware control inputs) corresponding to a user request to put the active communication session on hold (e.g., user input 674 and/or user input selecting option 676e in FIG. 6S). In response to detecting the one or more user inputs corresponding to the user request to put the active communication session on hold, the computer system: initiates the process for putting the active communication session on hold; and displays, via the one or more display generation components, a visual indication (e.g., 622, 632, and/or 636) that the active communication session is on hold (e.g., a visual indication that the active communication session is active (e.g., the connection with one or more other remote participants in the active communication session is maintained and/or is not terminated) but on hold). In some embodiments, even when the hold option (e.g., 616b) is not automatically displayed (e.g., even when the first set of hold criteria are not satisfied), a user is able to access and/or select an option to put the active communication session on hold. In some embodiments, putting the active communication session on hold comprises ceasing transmission of audio content into the active communication session and/or ceasing audio output from the active communication session. In some embodiments, while the active communication session is on hold, the computer system ceases to be directly connected to the active communication session, but a third-party service provider maintains the active communication session with one or more other remote participants in the active communication session. In some embodiments, while the active communication session is on hold, the computer system maintains a connection with the active communication session, but does not transmit audio content into the active communication session and does not generate audio output of audio content from the active communication session. Performing an operation when a set of conditions has been met without requiring further user input (such as by automatically displaying a hold option when certain criteria are met) enhances the operability of the device by reducing unnecessary inputs and/or steps to navigate through different user interfaces or sets of controls, reducing energy usage by the device. Furthermore, reducing the number of inputs needed to perform an operation (such as by reducing the number of inputs needed to put a communication session on hold by automatically displaying the hold option when criteria are met) enhances the operability of the device by reducing the number of inputs and time required to perform a particular operation, reducing energy usage by the device.

In some embodiments, the first user interface is a lock screen user interface (e.g., 620) that is indicative of the computer system being in a locked state (e.g., a state in which user authentication information (e.g., passcode-based authentication information and/or biometric authentication information) is required to transition the computer system into an unlocked state; and/or a locked state of the computer system that includes access to fewer features than in an unlocked state of the computer system). Providing improved feedback (such as by displaying an indication that the communication session is active but on hold) enhances the operability of the device by reducing accidental and mistaken inputs, reducing energy usage by the device. Furthermore, displaying a first user interface while the communication session is on hold improves the operability of the device, and allows the user to perform other tasks and/or functions while the communication session is on hold.

In some embodiments, the first user interface is a home screen user interface (e.g., 630) that includes a plurality of application icons (e.g., 630a-630q), including: a first application icon (e.g., 630a) that, when selected, causes the computer system to launch a first application; and a second application icon (e.g., 630b) that, when selected, causes the computer system to launch a second application different from the first application. Providing improved feedback (such as by displaying an indication that the communication session is active but on hold) enhances the operability of the device by reducing accidental and mistaken inputs, reducing energy usage by the device. Furthermore, displaying a first user interface while the communication session is on hold improves the operability of the device, and allows the user to perform other tasks and/or functions while the communication session is on hold.

In some embodiments, the first user interface is a first application user interface (e.g., 640) corresponding to a first application (e.g., a first application that is installed on the computer system). Providing improved feedback (such as by displaying an indication that the communication session is active but on hold) enhances the operability of the device by reducing accidental and mistaken inputs, reducing energy usage by the device. Furthermore, displaying a first user interface while the communication session is on hold improves the operability of the device, and allows the user to perform other tasks and/or functions while the communication session is on hold.

In some embodiments, while concurrently displaying the first visual indication (e.g., 622, 632, and/or 636) and the first user interface (e.g., 620, 630, and/or 640), the computer system (e.g., 600) detects, via the one or more input devices, a second set of one or more user inputs (e.g., one or more touch inputs, one or more button presses, one or more rotational inputs, one or more gesture inputs, and/or one or more spoken inputs). In response to detecting the second set of one or more user inputs: in accordance with a determination that the second set of one or more user inputs is directed to the first visual indication (and, in some embodiments, is not directed to the first user interface) (e.g., user input 624, and/or user input tapping notification 632), the computer system: ceases display of the first visual indication (e.g., 622, 632, and/or 636) and the first user interface (e.g., 620, 630, and/or 640); and displays, via the one or more display generation components, a communication session hold user interface (e.g., 626 and/or 648) that is indicative of the active communication session being on hold; and in accordance with a determination that the second set of one or more user inputs is directed to the first user interface (and, in some embodiments, is not directed to the first visual indication) (e.g., user input 638), the computer system performs an action with respect to the first user interface (e.g., 620, 630, and/or 640) while maintaining display of the first visual indication (e.g., 622, 632, and/or 636) (e.g., from FIGS. 6I-6J, in response to user input 638, computer system 600 maintains display of notification 636 while replacing user interface 630 with user interface 640; and/or in FIG. 6J and/or FIG. 6K-1, had the user provided a user input on user interface 640, computer system 600 would perform an operation with respect to user interface 640, such as scrolling user interface 640 and/or displaying different information within user interface 640). In some embodiments, performing the action with respect to the first user interface comprises modifying one or more visual characteristics of the first user interface. Providing improved feedback (such as by displaying an indication that the communication session is active but on hold) enhances the operability of the device by reducing accidental and mistaken inputs, reducing energy usage by the device. Furthermore, displaying a first user interface while the communication session is on hold improves the operability of the device, and allows the user to perform other tasks and/or functions while the communication session is on hold.

In some embodiments, performing the action with respect to the first user interface comprises replacing display of the first user interface with a second user interface different from the first user interface (e.g., ceasing display of the first user interface and displaying, via the one or more display generation components, the second user interface) (e.g., from FIGS. 6I-6J, in response to user input 638, computer system 600 maintains display of notification 636 while replacing user interface 630 with user interface 640). Providing improved feedback (such as by displaying an indication that the communication session is active but on hold) enhances the operability of the device by reducing accidental and mistaken inputs, reducing energy usage by the device. Furthermore, displaying a first user interface while the communication session is on hold improves the operability of the device, and allows the user to perform other tasks and/or functions while the communication session is on hold.

In some embodiments, performing the action with respect to the first user interface (e.g., 620, 630, and/or 640) comprises modifying one or more visual characteristics of the first user interface (e.g., scrolling the first user interface, displaying one or more objects that were not previously displayed in the first user interface, and/or ceasing display of one or more objects that were previously displayed in the first user interface) (e.g., in some embodiments, in FIG. 6H, had the user provided a scroll user input, computer system 600 would display scrolling of user interface 630 while maintaining display of notification 632; and/or in FIG. 6J and/or FIG. 6K-1, had the user provided a scroll user input, computer system 600 would display scrolling of user interface 640 while maintaining display of notification 636 and/or notification 632). Providing improved feedback (such as by displaying an indication that the communication session is active but on hold) enhances the operability of the device by reducing accidental and mistaken inputs, reducing energy usage by the device. Furthermore, displaying a first user interface while the communication session is on hold improves the operability of the device, and allows the user to perform other tasks and/or functions while the communication session is on hold.

In some embodiments, while displaying the first visual indication (e.g., 622, 632, and/or 636) indicative of the active communication session being on hold (e.g., in some embodiments, while the active communication session is on hold), the computer system (e.g., 600) receives an indication of audio content being transmitted into the active communication session by one or more other participants in the active communication session separate from the computer system (e.g., separate from the user of the computer system). In response to receiving the indication of audio content being transmitted into the active communication session by the one or more other participants in the active communication session, the computer system displays, via the one or more display generation components and within the first visual indication, a transcript (e.g., 642, 650, 642-1, 642-2, 650-1, and/or 650-2) that is descriptive of the audio content being transmitted into the active communication session by the one or more other participants in the active communication session. In some embodiments, the transcript includes a text transcription of detected speech and/or detected words spoken into the active communication session by one or more other participants in the communication session. Providing improved feedback (such as by displaying a transcript of detected speech in the on-hold communication session) enhances the operability of the device by reducing accidental and mistaken inputs, reducing energy usage by the device.

In some embodiments, in response to receiving the indication of audio content being transmitted into the active communication session by the one or more other participants in the active communication session: in accordance with a determination that the audio content being transmitted into the active communication session by the one or more other participants in the active communication session satisfies a first set of audio criteria (e.g., one or more criteria), the computer system displays, via the one or more display generation components and within the first visual indication, an answer call option (e.g., 644b) that, when selected, causes the computer system to initiate a process for re-connecting the active communication session (e.g., ending the hold of the active communication session; initiating and/or re-initiating transmission of audio content into the active communication session; and/or initiating and/or re-initiating audio output of audio content received from the active communication session and/or received from other participants in the active communication session). In some embodiments, in response to receiving the indication of audio content being transmitted into the active communication session by the one or more other participants in the active communication session: in accordance with a determination that the audio content being transmitted into the active communication session by the one or more other participants in the active communication session does not satisfy the first set of audio criteria, the computer system forgoes displaying the answer call option (e.g., in some embodiments, in FIG. 6M, notification 632 does not include option 644b based on a determination that the spoken audio input is indicative of an automated message). In some embodiments, while displaying the answer call option (e.g., 644b), the computer system detects one or more user inputs (e.g., 654a) corresponding to selection of the answer call option. In response to detecting the one or more user inputs corresponding to selection of the answer call option, the computer system ends the hold of the active communication session and/or re-connects the active communication session (e.g., initiates and/or re-initiates transmission of audio content into the active communication session; and/or initiates and/or re-initiates audio output of audio content received from the active communication session and/or received from other participants in the active communication session) (e.g., FIG. 6L). In some embodiments, the determination that the audio content being transmitted into the active communication session by the one or more other participants in the active communication session satisfies the first set of audio criteria comprises a determination that music that was being transmitted into the active communication session by the one or more other participants has stopped being transmitted into the active communication session by the one or more other participants (e.g., hold music has stopped). In some embodiments, the determination that the audio content being transmitted into the active communication session by the one or more other participants in the active communication session satisfies the first set of audio criteria comprises a determination that the audio content being transmitted into the active communication session by the one or more other participants includes spoken audio input (e.g., spoken words) transmitted into the active communication session by the one or more other participants (e.g., FIG. 6K-1). In some embodiments, the determination that the audio content being transmitted into the active communication session by the one or more other participants in the active communication session satisfies the first set of audio criteria comprises a determination that the spoken audio input and/or words spoken into the active communication session by the one or more other participants are indicative of a live person speaking into the active communication session (e.g., FIG. 6K-1) (and, for example, not an automated message or advertisement playing in the active communication session). Providing improved feedback (such as by displaying a transcript of detected speech in the on-hold communication session) enhances the operability of the device by reducing accidental and mistaken inputs, reducing energy usage by the device. Furthermore, performing an operation when a set of conditions has been met without requiring further user input (such as by automatically displaying an option to re-activate and/or re-connect the on-hold communication session when certain criteria are met) enhances the operability of the device by reducing unnecessary inputs and/or steps to navigate through different user interfaces or sets of controls, reducing energy usage by the device.

In some embodiments, in response to receiving the indication of audio content being transmitted into the active communication session by the one or more other participants in the active communication session: in accordance with a determination that the audio content being transmitted into the active communication session by the one or more other participants in the active communication session does not satisfy a first set of audio criteria, the computer system forgoes display of the answer call option (e.g., 644b) (e.g., in some embodiments, forgoing display of the answer call option while maintaining display of the first visual indication) (e.g., in some embodiments, in FIG. 6M, notification 632 does not include option 644b based, for example, on a determination that the spoken audio input is indicative of an automated message). In some embodiments, the determination that the audio content being transmitted into the active communication session by the one or more other participants in the active communication session does not satisfy the first set of audio criteria comprises a determination that the audio content includes music (e.g., FIG. 6M). In some embodiments, the determination that the audio content being transmitted into the active communication session by the one or more other participants in the active communication session does not satisfy the first set of audio criteria comprises a determination that spoken words being transmitted into the active communication session by the one or more other participants are not indicative of a live person speaking into the active communication session (and, for example, are indicative of an automated message or advertisement playing in the active communication session) (e.g., FIG. 6M). Providing improved feedback (such as by displaying a transcript of detected speech in the on-hold communication session) enhances the operability of the device by reducing accidental and mistaken inputs, reducing energy usage by the device. Furthermore, performing an operation when a set of conditions has been met without requiring further user input (such as by automatically displaying an option to re-activate and/or re-connect the on-hold communication session when certain criteria are met) enhances the operability of the device by reducing unnecessary inputs and/or steps to navigate through different user interfaces or sets of controls, reducing energy usage by the device.

In some embodiments, while concurrently displaying the first visual indication (e.g., 632) and the first user interface (e.g., 630): in accordance with a determination that that a first set of criteria (e.g., one or more criteria) are met, the computer system: ceases display of the first visual indication (e.g., 632); and displays, via the one or more display generation components and concurrently with the first user interface (e.g., 630), a second visual indication (e.g., 636) indicative of the active communication session being on hold, wherein the second visual indication is different from the first visual indication and is smaller in size (e.g., smaller in total area) than the first visual indication. In some embodiments, while concurrently displaying the first visual indication and the first user interface: in accordance with a determination that the first set of criteria are not met, the computer system forgoes display of the second visual indication (and, in some embodiments, maintains display of the first visual indication). Displaying user interface elements with different appearances at different times (such as by replacing display of the first visual indication with the second visual indication) helps to avoid image persistence or burn in effects that can occur with some display technologies when the same object is displayed with the same appearance at the same location repeatedly or for a long period of time. Furthermore, displaying the second visual indication that is smaller than the first visual indication preserves limited display space.

In some embodiments, the determination that the first set of criteria are met comprises a determination that the computer system has detected one or more user inputs (e.g., 634) corresponding to a user request to display the second visual indication (e.g., 636) (e.g., comprises detecting one or more user inputs corresponding to a user request to display the second visual indication). Displaying user interface elements with different appearances at different times (such as by replacing display of the first visual indication with the second visual indication) helps to avoid image persistence or burn in effects that can occur with some display technologies when the same object is displayed with the same appearance at the same location repeatedly or for a long period of time. Furthermore, displaying the second visual indication that is smaller than the first visual indication preserves limited display space.

In some embodiments, the determination that the first set of criteria are met comprises a determination that a threshold duration of time has elapsed (e.g., 3 seconds, 5 seconds, 7 seconds, 10 seconds, 20 seconds, or 30 seconds) without user interaction with the first visual indication (e.g., 632). Displaying user interface elements with different appearances at different times (such as by replacing display of the first visual indication with the second visual indication) helps to avoid image persistence or burn in effects that can occur with some display technologies when the same object is displayed with the same appearance at the same location repeatedly or for a long period of time. Furthermore, displaying the second visual indication that is smaller than the first visual indication preserves limited display space.

In some embodiments, while displaying the second visual indication (e.g., 636), the computer system detects, via the one or more input devices, one or more user inputs (e.g., one or more touch inputs, one or more button presses, one or more rotational inputs, one or more gesture inputs, and/or one or more spoken inputs) interacting with the second visual indication (e.g., 636). In response to detecting the one or more user inputs interacting with the second visual indication, the computer system: ceases display of the second visual indication (e.g., 636); and displays, via the one or more display generation components, the first visual indication (e.g., 632) (e.g., in some embodiments, from FIG. 6I, in response to a user input on visual indication 636, computer system 600 returns to the state shown in FIG. 6H). Displaying user interface elements with different appearances at different times (such as by replacing display of the first visual indication with the second visual indication) helps to avoid image persistence or burn in effects that can occur with some display technologies when the same object is displayed with the same appearance at the same location repeatedly or for a long period of time. Furthermore, displaying the second visual indication that is smaller than the first visual indication preserves limited display space.

In some embodiments, while displaying the second visual indication (e.g., 636), the computer system (e.g., 600) receives an indication of audio content being transmitted into the active communication session by one or more other participants in the active communication session separate from the computer system (e.g., separate from the user of the computer system). In response to receiving the indication of audio content being transmitted into the active communication session by the one or more other participants in the active communication session (and, in some embodiments, in accordance with a determination that the audio content satisfies one or more criteria), the computer system: ceases display of the second visual indication (e.g., 636); and displays, via the one or more display generation components, the first visual indication (e.g., 632) (e.g., FIG. 6J to FIG. 6K-1). Displaying user interface elements with different appearances at different times (such as by replacing display of the first visual indication with the second visual indication) helps to avoid image persistence or burn in effects that can occur with some display technologies when the same object is displayed with the same appearance at the same location repeatedly or for a long period of time. Furthermore, displaying the second visual indication that is smaller than the first visual indication preserves limited display space.

In some embodiments, while the active communication session is on hold, the computer system (e.g., 600) receives a request to initiate a second communication session different from the active communication session (e.g., receiving an incoming audio call and/or video call request) (e.g., FIG. 6P, computer system 600 receives a request to initiate a communication session with Ellie K.). In response to receiving the request to initiate a second communication session different from the active communication session, the computer system displays, via the one or more display generation components, an indication of the request to initiate the second communication session (e.g., 668). While displaying the indication of the request to initiate the second communication session, the computer system detects, via the one or more input devices, one or more user inputs (e.g., 670) (e.g., one or more touch inputs, one or more button presses, one or more rotational inputs, one or more gesture inputs, and/or one or more spoken inputs) corresponding to a user request to initiate the second communication session. In response to detecting the one or more user inputs corresponding to a user request to initiate the second communication session, the computer system displays, via the one or more display generation components, a notification (e.g., 672) that initiating the second communication session will end the active communication session (e.g., in some embodiments, without initiating the second communication session and/or without ending the active communication session and/or while maintaining the active communication session as active but on hold). Providing improved feedback (such as by providing feedback that initiating a new communication session will end the active communicatino session) enhances the operability of the device by reducing accidental and mistaken inputs, thereby reducing energy usage by the device.

Note that details of the processes described above with respect to method 800 (e.g., FIG. 8) are also applicable in an analogous manner to the methods described above. For example, method 700 optionally includes one or more of the characteristics of the various methods described above with reference to method 800. For example, in some embodiments, the call user interface recited in method 700 is the call user interface recited in method 800. In another example, in some embodiments, the active communication session recited in method 700 is the active communication session recited in method 800. For brevity, these details are not repeated below.
Exemplary methods, computer systems, computer program products, and non-transitory computer-readable storage media are set out in the following items.
1. A method, comprising:
   at a computer system that is in communication with one or more display generation components and one or more input devices:
   displaying, via the one or more display generation components, a call user interface, wherein the call user interface is indicative of the computer system participating in an active communication session;
   while displaying the call user interface, detecting first audio content corresponding to the active communication session; and
   in response to detecting the first audio content corresponding to the active communication session:
      in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and
      in accordance with a determination that the active communication session does not satisfy the first set of one or more hold criteria, forgoing display of the hold option.
2. The method of item 1, further comprising:
   while displaying the hold option, detecting, via the one or more input devices, one or more user inputs corresponding to selection of the hold option; and
   in response to detecting the one or more user inputs corresponding to selection of the hold option:
      initiating the process for putting the active communication session on hold; and
      displaying, via the one or more display generation components, a visual indication that the active communication session is on hold.
3. The method of item 2, further comprising:
   in response to detecting the one or more user inputs corresponding to selection of the hold option, ceasing audio output corresponding to the active communication session.
4. The method of any of items 2-3, further comprising:
   while the active communication session is on hold:
   concurrently displaying, via the one or more display generation components:
   a second visual indication that the active communication session is on hold; and
   a first user interface that is different from the call user interface.
5. The method of item 4, wherein the first user interface is a lock screen user interface that is indicative of the computer system being in a locked state.
6. The method of item 4, wherein the first user interface is a home screen user interface that includes a plurality of application icons, including:
   a first application icon that, when selected, causes the computer system to launch a first application; and
   a second application icon that, when selected, causes the computer system to launch a second application different from the first application.
7. The method of item 4, wherein the first user interface is a first application user interface corresponding to a first application.
8. The method of any of items 2-7, further comprising:
   while the active communication session is on hold:
   receiving an indication of audio content being transmitted into the active communication session by one or more other participants in the active communication session separate from the computer system; and
   in response to receiving the indication of audio content being transmitted into the active communication session by the one or more other participants in the active communication session, displaying, via the one or more display generation components, a transcript that is descriptive of the audio content being transmitted into the active communication session by the one or more other participants in the active communication session.
9. The method of any of items 1-8, wherein the determination that the active communication session satisfies the first set of one or more hold criteria includes a determination that one or more other participants in the active communication session are transmitting music into the active communication session.
10. The method of any of items 1-9, wherein the determination that the active communication session satisfies the first set of one or more hold criteria includes a determination that the user of the computer system is not transmitting spoken audio input into the active communication session.
11. The method of any of items 1-10, wherein the determination that the active communication session satisfies the first set of one or more hold criteria includes a determination that participants in the active communication session are not transmitting spoken audio input into the active communication session.
12. The method of any of items 1-11, wherein the determination that the active communication session satisfies the first set of one or more hold criteria includes a determination that one or more participants in the active communication session are transmitting an automated message into the active communication session.
13. The method of any of items 1-12, the determination that the active communication session satisfies the first set of one or more hold criteria includes a determination that the user of the computer system has enabled a mute option for the active communication session.
14. The method of any of items 1-13, further comprising:
   while displaying the call user interface without displaying the hold option, detecting, via the one or more input devices, one or more user inputs corresponding to a user request to put the active communication session on hold; and
   in response to detecting the one or more user inputs corresponding to the user request to put the active communication session on hold:
      initiating the process for putting the active communication session on hold; and
      displaying, via the one or more display generation components, a visual indication that the active communication session is on hold.
15. A non-transitory computer-readable storage medium storing one or more programs configured to be executed by one or more processors of a computer system that is in communication with one or more display generation components and one or more input devices, the one or more programs including instructions for performing the method of any of items 1-14.
16. A computer system that is configured to communicate with one or more display generation components and one or more input devices, the computer system comprising:
   one or more processors; and
   memory storing one or more programs configured to be executed by the one or more processors, the one or more programs including instructions for performing the method of any of items 1-14.
17. A computer system that is configured to communicate with one or more display generation components and one or more input devices, comprising:
   means for performing the method of any of items 1-14.
18. A computer program product, comprising one or more programs configured to be executed by one or more processors of a computer system that is in communication with one or more display generation components and one or more input devices, the one or more programs including instructions for performing the method of any of items 1-14.
19. A non-transitory computer-readable storage medium storing one or more programs configured to be executed by one or more processors of a computer system that is in communication with one or more display generation components and one or more input devices, the one or more programs including instructions for:
   displaying, via the one or more display generation components, a call user interface, wherein the call user interface is indicative of the computer system participating in an active communication session;
   while displaying the call user interface, detecting first audio content corresponding to the active communication session; and
   in response to detecting the first audio content corresponding to the active communication session:
      in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and
      in accordance with a determination that the active communication session does not satisfy the first set of one or more hold criteria, forgoing display of the hold option.
20. A computer system configured to communicate with one or more display generation components and one or more input devices, comprising:
   one or more processors; and
   memory storing one or more programs configured to be executed by the one or more processors, the one or more programs including instructions for:
      displaying, via the one or more display generation components, a call user interface, wherein the call user interface is indicative of the computer system participating in an active communication session;
      while displaying the call user interface, detecting first audio content corresponding to the active communication session; and
      in response to detecting the first audio content corresponding to the active communication session:
         in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and
         in accordance with a determination that the active communication session does not satisfy the first set of one or more hold criteria, forgoing display of the hold option.
21. A computer system configured to communicate with one or more display generation components and one or more input devices, comprising:
   means for displaying, via the one or more display generation components, a call user interface, wherein the call user interface is indicative of the computer system participating in an active communication session;
   means for, while displaying the call user interface, detecting first audio content corresponding to the active communication session; and
   means for, in response to detecting the first audio content corresponding to the active communication session:
      in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and
      in accordance with a determination that the active communication session does not satisfy the first set of one or more hold criteria, forgoing display of the hold option.
22. A computer program product, comprising one or more programs configured to be executed by one or more processors of a computer system that is in communication with one or more display generation components and one or more input devices, the one or more programs including instructions for:
   displaying, via the one or more display generation components, a call user interface, wherein the call user interface is indicative of the computer system participating in an active communication session;
   while displaying the call user interface, detecting first audio content corresponding to the active communication session; and
   in response to detecting the first audio content corresponding to the active communication session:
      in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and
      in accordance with a determination that the active communication session does not satisfy the first set of one or more hold criteria, forgoing display of the hold option.
23. A method, comprising:
   at a computer system that is in communication with one or more display generation components and one or more input devices:
   displaying, via the one or more display generation components, a call user interface, wherein the call user interface is indicative of the computer system participating in an active communication session;
   while displaying the call user interface, detecting, via the one or more input devices, a first set of one or more user inputs, wherein the first set of one or more user inputs includes one or more user inputs corresponding to a user request to put the active communication session on hold; and
   in response to detecting the first set of one or more user inputs, concurrently displaying, via the one or more display generation components:
      a first visual indication indicative of the active communication session being on hold; and
      a first user interface that is different from the call user interface and does not pertain to the active communication session.
24. The method of item 23, further comprising:
   while displaying the call user interface, and prior to detecting the first set of one or more user inputs, detecting, via the one or more input devices, first audio content corresponding to the active communication session; and
   in response to detecting the first audio content corresponding to the active communication session:
      in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication satisfies the first set of one or more hold criteria includes one or more determinations pertaining to the first audio content corresponding to the active communication session.
25. The method of item 24, wherein the determination that the active communication session satisfies the first set of one or more hold criteria includes:
   a determination that one or more other participants in the active communication session are transmitting music into the active communication session; and
   a determination that the user of the computer system is not transmitting spoken audio input into the active communication session.
26. The method of any of items 24-25, further comprising:
   while displaying the call user interface without displaying the hold option, detecting, via the one or more input devices, one or more user inputs corresponding to a user request to put the active communication session on hold; and
   in response to detecting the one or more user inputs corresponding to the user request to put the active communication session on hold:
      initiating the process for putting the active communication session on hold; and
      displaying, via the one or more display generation components, a visual indication that the active communication session is on hold.
27. The method of any of items 23-26, wherein the first user interface is a lock screen user interface that is indicative of the computer system being in a locked state.
28. The method of any of items 23-27, wherein the first user interface is a home screen user interface that includes a plurality of application icons, including:
   a first application icon that, when selected, causes the computer system to launch a first application; and
   a second application icon that, when selected, causes the computer system to launch a second application different from the first application.
29. The method of any of items 23-28, wherein the first user interface is a first application user interface corresponding to a first application.
30. The method of any of items 23-29, further comprising:
   while concurrently displaying the first visual indication and the first user interface, detecting, via the one or more input devices, a second set of one or more user inputs; and
   in response to detecting the second set of one or more user inputs:
      in accordance with a determination that the second set of one or more user inputs is directed to the first visual indication:
         ceasing display of the first visual indication and the first user interface; and
         displaying, via the one or more display generation components, a communication session hold user interface that is indicative of the active communication session being on hold; and
      in accordance with a determination that the second set of one or more user inputs is directed to the first user interface:
         performing an action with respect to the first user interface while maintaining display of the first visual indication.
31. The method of item 30, wherein performing the action with respect to the first user interface comprises replacing display of the first user interface with a second user interface different from the first user interface.
32. The method of any of items 30-31, wherein performing the action with respect to the first user interface comprises modifying one or more visual characteristics of the first user interface.
33. The method of any of items 23-32, further comprising:
   while displaying the first visual indication indicative of the active communication session being on hold, receiving an indication of audio content being transmitted into the active communication session by one or more other participants in the active communication session separate from the computer system; and
   in response to receiving the indication of audio content being transmitted into the active communication session by the one or more other participants in the active communication session, displaying, via the one or more display generation components and within the first visual indication, a transcript that is descriptive of the audio content being transmitted into the active communication session by the one or more other participants in the active communication session.
34. The method of item 33, further comprising:
   in response to receiving the indication of audio content being transmitted into the active communication session by the one or more other participants in the active communication session:
   in accordance with a determination that the audio content being transmitted into the active communication session by the one or more other participants in the active communication session satisfies a first set of audio criteria, displaying, via the one or more display generation components and within the first visual indication, an answer call option that, when selected, causes the computer system to initiate a process for re-connecting the active communication session.
35. The method of item 34, in response to receiving the indication of audio content being transmitted into the active communication session by the one or more other participants in the active communication session:
   in accordance with a determination that the audio content being transmitted into the active communication session by the one or more other participants in the active communication session does not satisfy a first set of audio criteria, forgoing display of the answer call option.
36. The method of any of items 23-35, further comprising:
   while concurrently displaying the first visual indication and the first user interface:
   in accordance with a determination that that a first set of criteria are met:
   ceasing display of the first visual indication; and
   displaying, via the one or more display generation components and concurrently with the first user interface, a second visual indication indicative of the active communication session being on hold, wherein the second visual indication is different from the first visual indication and is smaller in size than the first visual indication.
37. The method of item 36, wherein the determination that the first set of criteria are met comprises a determination that the computer system has detected one or more user inputs corresponding to a user request to display the second visual indication.
38. The method of any of items 36-37, wherein the determination that the first set of criteria are met comprises a determination that a threshold duration of time has elapsed without user interaction with the first visual indication.
39. The method of any of items 36-38, further comprising:
   while displaying the second visual indication, detecting, via the one or more input devices, one or more user inputs interacting with the second visual indication; and
   in response to detecting the one or more user inputs interacting with the second visual indication:
      ceasing display of the second visual indication; and
      displaying, via the one or more display generation components, the first visual indication.
40. The method of any of items 36-39, further comprising:
   while displaying the second visual indication, receiving an indication of audio content being transmitted into the active communication session by one or more other participants in the active communication session separate from the computer system; and
   in response to receiving the indication of audio content being transmitted into the active communication session by the one or more other participants in the active communication session:
      ceasing display of the second visual indication; and
      displaying, via the one or more display generation components, the first visual indication.
41. The method of any of items 23-40, further comprising:
   while the active communication session is on hold, receiving a request to initiate a second communication session different from the active communication session;
   in response to receiving the request to initiate a second communication session different from the active communication session, displaying, via the one or more display generation components, an indication of the request to initiate the second communication session;
   while displaying the indication of the request to initiate the second communication session, detecting, via the one or more input devices, one or more user inputs corresponding to a user request to initiate the second communication session; and
   in response to detecting the one or more user inputs corresponding to a user request to initiate the second communication session, displaying, via the one or more display generation components, a notification that initiating the second communication session will end the active communication session.
42. A non-transitory computer-readable storage medium storing one or more programs configured to be executed by one or more processors of a computer system that is in communication with one or more display generation components and one or more input devices, the one or more programs including instructions for performing the method of any of items 23-41.
43. A computer system that is configured to communicate with one or more display generation components and one or more input devices, the computer system comprising:
   one or more processors; and
   memory storing one or more programs configured to be executed by the one or more processors, the one or more programs including instructions for performing the method of any of items 23-41.
44. A computer system that is configured to communicate with one or more display generation components and one or more input devices, comprising:
   means for performing the method of any of items 23-41.
45. A computer program product, comprising one or more programs configured to be executed by one or more processors of a computer system that is in communication with one or more display generation components and one or more input devices, the one or more programs including instructions for performing the method of any of items 23-41.
46. A non-transitory computer-readable storage medium storing one or more programs configured to be executed by one or more processors of a computer system that is in communication with one or more display generation components and one or more input devices, the one or more programs including instructions for:
   displaying, via the one or more display generation components, a call user interface, wherein the call user interface is indicative of the computer system participating in an active communication session;
   while displaying the call user interface, detecting, via the one or more input devices, a first set of one or more user inputs, wherein the first set of one or more user inputs includes one or more user inputs corresponding to a user request to put the active communication session on hold; and
   in response to detecting the first set of one or more user inputs, concurrently displaying, via the one or more display generation components:
      a first visual indication indicative of the active communication session being on hold; and
      a first user interface that is different from the call user interface and does not pertain to the active communication session.
47. A computer system configured to communicate with one or more display generation components and one or more input devices, comprising:
   one or more processors; and
   memory storing one or more programs configured to be executed by the one or more processors, the one or more programs including instructions for:
      displaying, via the one or more display generation components, a call user interface, wherein the call user interface is indicative of the computer system participating in an active communication session;
      while displaying the call user interface, detecting, via the one or more input devices, a first set of one or more user inputs, wherein the first set of one or more user inputs includes one or more user inputs corresponding to a user request to put the active communication session on hold; and
      in response to detecting the first set of one or more user inputs, concurrently displaying, via the one or more display generation components:
         a first visual indication indicative of the active communication session being on hold; and
         a first user interface that is different from the call user interface and does not pertain to the active communication session.
48. A computer system configured to communicate with one or more display generation components and one or more input devices, comprising:
   means for displaying, via the one or more display generation components, a call user interface, wherein the call user interface is indicative of the computer system participating in an active communication session;
   means for, while displaying the call user interface, detecting, via the one or more input devices, a first set of one or more user inputs, wherein the first set of one or more user inputs includes one or more user inputs corresponding to a user request to put the active communication session on hold; and
   means for, in response to detecting the first set of one or more user inputs, concurrently displaying, via the one or more display generation components:
      a first visual indication indicative of the active communication session being on hold; and
      a first user interface that is different from the call user interface and does not pertain to the active communication session.
49. A computer program product, comprising one or more programs configured to be executed by one or more processors of a computer system that is in communication with one or more display generation components and one or more input devices, the one or more programs including instructions for:
   displaying, via the one or more display generation components, a call user interface, wherein the call user interface is indicative of the computer system participating in an active communication session;
   while displaying the call user interface, detecting, via the one or more input devices, a first set of one or more user inputs, wherein the first set of one or more user inputs includes one or more user inputs corresponding to a user request to put the active communication session on hold; and
   in response to detecting the first set of one or more user inputs, concurrently displaying, via the one or more display generation components:
      a first visual indication indicative of the active communication session being on hold; and
      a first user interface that is different from the call user interface and does not pertain to the active communication session.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve the delivery to users of content or services that may be of interest to them. The present disclosure contemplates that in some instances, this gathered data may include personal information data that uniquely identifies or can be used to contact or locate a specific person. Such personal information data can include demographic data, location-based data, telephone numbers, email addresses, social network IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to deliver targeted content and/or services that are of greater interest to the user. Accordingly, use of such personal information data enables users to have calculated control of the delivered content and/or services. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of content delivery services, the present technology can be configured to allow users to select to "opt in" or "opt out" of participation in the collection of personal information data during registration for services or anytime thereafter. In another example, users can select not to provide personal data for targeted content delivery services. In yet another example, users can select to limit the length of personal data is maintained or entirely prohibit the use of personal data in content and/or service delivery. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content and/or services can be selected and delivered to users by inferring preferences based on non-personal information data or a bare minimum amount of personal information, such as the content being requested by the device associated with a user, other non-personal information available to the content delivery services, or publicly available information.

## Claims

1. A method, comprising:
at a computer system that is in communication with one or more display generation components and one or more input devices:
displaying, via the one or more display generation components, a call user interface, wherein the call user interface is indicative of the computer system participating in an active communication session;
while displaying the call user interface, detecting first audio content corresponding to the active communication session; and
in response to detecting the first audio content corresponding to the active communication session:
in accordance with a determination that the active communication session satisfies a first set of one or more hold criteria, displaying, via the one or more display generation components, a hold option that, when selected, causes the computer system to initiate a process for putting the active communication session on hold, wherein the determination that the active communication session satisfies the first set of one or more hold criteria includes one or more determinations pertaining to the first audio content corresponding to the active communication session; and
in accordance with a determination that the active communication session does not satisfy the first set of one or more hold criteria, forgoing display of the hold option.

2. The method of claim 1, further comprising:
while displaying the hold option, detecting, via the one or more input devices, one or more user inputs corresponding to selection of the hold option; and
in response to detecting the one or more user inputs corresponding to selection of the hold option:
initiating the process for putting the active communication session on hold; and
displaying, via the one or more display generation components, a visual indication that the active communication session is on hold.

3. The method of claim 2, further comprising:
in response to detecting the one or more user inputs corresponding to selection of the hold option, ceasing audio output corresponding to the active communication session.

4. The method of any of claims 2-3, further comprising:
while the active communication session is on hold:
concurrently displaying, via the one or more display generation components:
a second visual indication that the active communication session is on hold; and
a first user interface that is different from the call user interface.

5. The method of claim 4, wherein the first user interface is a lock screen user interface that is indicative of the computer system being in a locked state.

6. The method of claim 4, wherein the first user interface is a home screen user interface that includes a plurality of application icons, including:
a first application icon that, when selected, causes the computer system to launch a first application; and
a second application icon that, when selected, causes the computer system to launch a second application different from the first application.

7. The method of claim 4, wherein the first user interface is a first application user interface corresponding to a first application.

8. The method of any of claims 2-7, further comprising:
while the active communication session is on hold:
receiving an indication of audio content being transmitted into the active communication session by one or more other participants in the active communication session separate from the computer system; and
in response to receiving the indication of audio content being transmitted into the active communication session by the one or more other participants in the active communication session, displaying, via the one or more display generation components, a transcript that is descriptive of the audio content being transmitted into the active communication session by the one or more other participants in the active communication session.

9. The method of any of claims 1-8, wherein the determination that the active communication session satisfies the first set of one or more hold criteria includes a determination that one or more other participants in the active communication session are transmitting music into the active communication session.

10. The method of any of claims 1-9, wherein the determination that the active communication session satisfies the first set of one or more hold criteria includes a determination that the user of the computer system is not transmitting spoken audio input into the active communication session.

11. The method of any of claims 1-10, wherein the determination that the active communication session satisfies the first set of one or more hold criteria includes a determination that participants in the active communication session are not transmitting spoken audio input into the active communication session.

12. The method of any of claims 1-11, wherein the determination that the active communication session satisfies the first set of one or more hold criteria includes a determination that one or more participants in the active communication session are transmitting an automated message into the active communication session.

13. The method of any of claims 1-12, the determination that the active communication session satisfies the first set of one or more hold criteria includes a determination that the user of the computer system has enabled a mute option for the active communication session.

14. The method of any of claims 1-13, further comprising:
while displaying the call user interface without displaying the hold option, detecting, via the one or more input devices, one or more user inputs corresponding to a user request to put the active communication session on hold; and
in response to detecting the one or more user inputs corresponding to the user request to put the active communication session on hold:
initiating the process for putting the active communication session on hold; and
displaying, via the one or more display generation components, a visual indication that the active communication session is on hold.

15. A computer-readable storage medium storing one or more programs configured to be executed by one or more processors of a computer system that is in communication with one or more display generation components and one or more input devices, the one or more programs including instructions for performing the method of any of claims 1-14.

16. A computer system that is configured to communicate with one or more display generation components and one or more input devices, the computer system comprising:
one or more processors; and
memory storing one or more programs configured to be executed by the one or more processors, the one or more programs including instructions for performing the method of any of claims 1-14.
